# EUROPÄISCHE PATENTSCHRIFT

(11) **EP 3 899 369 B1**
(45) Veröffentlichungstag und Bekanntmachung des Hinweises auf die Patenterteilung: **12.03.2025**
(21) Anmeldenummer: 19836490.3
(22) Anmeldetag: 20.12.2019
(51) Int. Cl.: F23D 11/44, B60H 1/22, H01M 8/04014, H01M 8/0612, H01M 8/1018

(54) **BRENNERSYSTEM, SYSTEM MIT EINEM SOLCHEN BRENNERSYSTEM UND VERFAHREN ZUR BEREITSTELLUNG VON WÄRMEENERGIE MITTELS EINES SOLCHEN BRENNERSYSTEMS**
BURNER SYSTEM, SYSTEM COMPRISING A BURNER SYSTEM, AND METHOD FOR PROVIDING THERMAL ENERGY BY MEANS OF A BURNER SYSTEM
SYSTÈME DE BRÛLEUR, SYSTÈME COMPRENANT UN TEL SYSTÈME DE BRÛLEUR ET PROCÉDÉ DE FOURNITURE D'ÉNERGIE THERMIQUE AU MOYEN D'UN TEL SYSTÈME DE BRÛLEUR

(30) Priorität: 21.12.2018 DE 102018133529
(43) Veröffentlichungstag der Anmeldung: 27.10.2021
(73) Patentinhaber: Siqens GmbH, 80687 München (DE)
(72) Erfinder: GROSSGASTEIGER, Martin, 81539 München (DE); NEUMANN, Marco, 80339 München (DE); WÖSSNER, Matthias, 81245 München (DE); STOHLDREIER, Eilhard, 83043 Bad Aibling (DE); BERNINGER, Mark Dougall, 81543 München (DE)
(74) Vertreter: HGF
(86) Internationale Anmeldenummer: PCT/EP2019/086556
(87) Internationale Veröffentlichungsnummer: WO 2020/127892

(56) Entgegenhaltungen:
- CH-A- 116 460
- DE-A1- 3 152 948
- JP-A- S57 134 606

## Beschreibung

Die vorliegende Erfindung betrifft ein Brennersystem sowie ein Verfahren zum Bereitstellen von thermischer Energie.

Bei fossilen Energiequellen, wie z.B. Kohle, Gas und Öl wird bei der Verbrennung der vorhandene Kohlenstoff irreversibel in Kohlenstoffdioxid umgesetzt und fördert damit den Treibhauseffekt, der zu einer globalen Erwärmung führt.

Eine Alternative zu diesen Energiequellen stellt bspw. Methanol dar. Methanol ist eine sehr weit verbreitete Industriechemikalie, die als Treibstoff in Europa und den USA weniger populär ist. Neben dem Einsatz als Treibstoff kann Methanol durch chemische Reaktion als Energiespeicher genutzt werden. Die Funktion eines Energiespeichers basiert auf seiner kontrollierten Aufnahme einer Energiemenge, die zeitlich verzögert wieder abgegeben werden kann.

Bei Brennern kleiner Leistung, insbesondere Brenner für Haushaltsheizungen, werden zunehmend Oberflächenbrenner eingesetzt. Bei diesem Prinzip besteht der Brennerkopf aus einem porösen Material. Dafür wird in der Regel hochhitzebeständige Metall- oder Keramikfaser verwendet. Brennstoff und Luft werden vorgemischt und brennen beim Durchströmen des Brennerkopfes. Auf Grund der kleinen Strömungskanäle wird die Reaktionswärme gut konvektiv an das Material des Brennerkopfes geleitet. Vom Brennerkopf strahlt die Wärme an die Wände des Heizkessels. Die Glühtemperatur des Brennerkopfes stellt sich zwischen 700 °C und 900 °C ein. In diesem Temperaturbereich ist die Bildung von thermischem NOₓ gehemmt. Die Brenner zeichnen sich damit durch extrem niedrige NOₓ-Emissionen aus.

In Bezug auf die Form des Brennerkopfes unterscheiden sich die Brenner in ebenflächige Brenner, zylindrische Brenner und halbkugelförmige Brenner.

Als ebenflächiger Brennerkopf ist ein "Ceramic-Foam-Brenner" bekannt. Bei diesem Brenner durchströmt ein Gas-Luft-Gemisch einen aus Keramik-Schaumstoff gebauten Brennerkopf und zündet an dessen innerer Oberfläche. Die Verbrennung findet an der porösen Oberfläche statt.

Als Brenner mit zylinderförmigen Kopf ist der Magma-Brenner bekannt. Dessen Kopf besteht aus einem Sieb aus Edelstahl, das von einer Keramikfaserschicht umgeben ist. Die feinkörnige Keramikschicht weist Aluminium-Silicat-Einschlüsse zum Erreichen einer höheren Wärmebeständigkeit auf. Das Gas-Luft-Gemisch wird verdrallt zugeführt.

Ein Brennerkopf mit halbkugelform ist der Matrix-Brenner. Die Oberfläche besteht aus einem hochlegiertem Edelstahldrahtgeflecht.

Eine Brennstoffzelle ist eine galvanische Zelle, die die chemische Reaktionsenergie eines kontinuierlich zugeführten Brennstoffes und eines Oxidationsmittels in elektrische Energie wandelt. Die Einteilung der verschiedenen Arten erfolgt einerseits durch den Elektrolyten (z.B. Polymer-Elektrolyt-Membran Brennstoffzelle, PEMFC) und andererseits anhand des verwendeten Brennstoffs (z.B. DMFC).

In der WO 2010/066900 A1 ist eine Befeuchtungseinheit zum Bereitstellen eines Brennstoff- und Wasserdampfenthaltenden Trägergases zur Versorgung einer Brennstoffzelle offenbart. Die Befeuchtungseinheit umfasst einen Befeuchtungsraum, der zum Aufnehmen einer brennstoffenthaltenden Flüssigkeit ausgebildet ist, einen in den Befeuchtungsraum mündenden Einlass zum Zuführen einer brennstoffenthaltenden Flüssigkeit, einen weiteren in den Befeuchtungsraum mündenden Einlass zum Zuführen eines Trägergases, derart dass das Trägergas im Befeuchtungsraum mit der Flüssigkeit in Kontakt steht. Weiterhin ist ein Auslass zum Ausgeben des gasförmigen Brennstoffes enthaltenden Trägergases vorgesehen, wobei eine Steuereinrichtung vorgesehen ist, die die Brennstoffenthaltende Flüssigkeit im Befeuchtungsraum auf einer Temperatur unterhalb ihres Siedepunkts einstellt. Die Steuereinrichtung ist derart ausgebildet, dass eine Regelung der Dampfdrücke vom Brennstoff und Wasserdampf durch Abstimmung von Brennstoffkonzentration und Temperatur der Brennstoffenthaltenden Flüssigkeit erfolgt.

Aus der WO 2015/110545 A1 geht ein Brennstoffzellensystem zur thermisch gekoppelten Reformierung mit Reformataufbereitung hervor. Dieses System umfasst einen Brennstoffzellenstapel mit einem Anodeneinlass, einem Anodenauslass, einem Kathodeneinlass und einem Kathodenauslass, und eine mit dem Brennstoffzellenstapel thermisch gekoppelte Reformereinrichtung zur Dampfreformierung zum Bereitstellen eines Anodenfluids, das reformierten Brennstoff umfasst, die dem Anodeneinlass vorgeschaltet ist. Der Brennstoffzellenstapel und die Reformereinrichtung sind derart thermisch gekoppelt, dass die Abwärme des Brennstoffzellenstapels mittels Wärmeleitung auf die Reformereinrichtung derart übertragen wird, und zumindest teilweise zum Betrieb der Reformereinrichtung genutzt wird, und wobei zumindest eine zwischen der Reformereinrichtung und dem Anodeneinlass angeordnete Aufbereitungseinrichtung zum Entfernen und/oder Reformieren von nicht reformiertem Brennstoff und/oder für den Brennstoffzellenstapel schädlichen Stoffen aus dem Anodenfluid vorgesehen ist, wobei eine Betriebstemperatur des Brennstoffzellenstapels im Bereich zwischen 140°C und 230°C liegt.

Damit Brennstoffzellenstapel ihre Betriebstemperatur erreichen ist meist eine elektrische Heizeinrichtung vorgesehen.

In der EP 2 706 052 A3 sind ein Verfahren und eine Vorrichtung zur Verwendung von Methanol in einem Verbrennungsmotor bekannt. Ein entsprechendes System kann mittels einer Standheizung erhitzt werden, um das System zu Starten.

Aus der US 5 372 115 A geht ein Kraftstoffsystem für einen Diesel-Verbrennungsmotor hervor, der mit Methanol und anderen flüssigen Kraftstoffen nach Art eines Dual Fuel System betrieben werden kann.

Von der Firma Buderus ist ein Öl-Verdampfungsbrenner bekannt. Hierbei ist vorgesehen Heizöl in stark vorgeheizte Brennerluft einzuspritzen. Eine Oberflächenvergrößerung des Heizöls erfolgt über die Zerstäubung beim Einspritzen mittels eines Einspritzventils, eine zum Verdampfen benötigte Energie wird durch das Einbringen von heißer Luft bereitgestellt.

In der EP 1 703 578 A1 ist ein gasbetriebenes Startsystem für ein Reformer-Brennstoffzellensystem offenbart.

Dieses umfasst zumindest einen Reformer, eine Brennstoffzelle und einen außerhalb der Brennstoffzelle angeordneten Brenner, wie z.B. ein Flächenbrenner mit niedriger Flammhöhe, z.B. ein Brenner mit keramischer oder metallischer Oberfläche bzw. einer Oberfläche aus Faserwerkstoffen, wie z.B. eine mit Siliziumkarbid beschichtete Keramik-Fasermatte, um Reformer und Brennstoffzellenstapel aufzuheizen.

Aus der DE 199 10 387 A1 geht eine Brennstoffzellenbatterie mit einem Stack und einer Heizeinrichtung hervor. Die von der Heizeinrichtung bereitgestellte Wärme soll zum Aufheizen des Brennstoffzellenstapels nutzbar sein. Bei dieser Brennstoffzellenbatterie kann zumindest ein Prozessgaskanal vorgesehen sein, um mittels eines Wärmetransportmediums thermische Energie bereitzustellen. Als Heizeinrichtung wird jeder beheizbare Raum bezeichnet, in dem, auch unter Anwendung eines Wärmetauschers, ein Wärmetransportmedium erwärmt werden kann. Die Heizeinrichtung umfasst bevorzugt ein Heizelement wie einen Katalytbrenner und/oder ein elektrisches Heizelement oder einen Reformer.

In der DE 199 31 061 A ist ein Brennstoffzellensystem mit Kühlkreislauf offenbart. Dabei ist eine Wärmesenke mit einer Zuleitung des Brennstoffes und/oder des Oxidationsmittel derart verbunden, dass entsprechender Wärmeaustausch stattfinden kann. Somit soll es möglich sein die Gas-/Fluidströme der Brennstoffzelle mit der Abwärme eines Kühlsystems zu heizen.

Aus der DE 272 1 818 A1 geht ein Brenner zum Verbrennen von flüssigem Brennstoff mit Verdampfer hervor. Der Verdampfer wird ausschließlich elektrisch beheizt.

In der DE 10 2008 057 146 B4 ist betriebsstoffbetriebenes Fahrzeugheizgerät mit einer Strahlpumpe für Verbrennungsluft offenbart.

Aus der DE 10 2011 050 368 A1 ist ein Verdampferbrenner mit Verdampfer bekannt.

In der DE 10 2012 101 580 A1 ist ein mit Flüssigbrennstoff betriebener, mobiler Brenner mit Primär- und Sekundärbrennzone sowie einer Luftleitvorrichtung zur Rezirkulation der Brennluft, um eine gute Durchmischung von Brennluft und Brennstoff zu ermöglichen. Ein weiterer solcher Brenner ist auch aus der DE 10 2014 103 814 A1 bekannt.

In der EP 23 15 493 A1 ist eine elektrische Widerstandsheizeinrichtung zum Beheizen einer einem Fahrzeuginnenraum zugeführten Luft offenbart.

Aus der US 9,285,114 B2 geht ein Dieselpartikelfilter (DPF) hervor.

In der DE 10 2009 026 266 A1 ist ein mobiles Heizgerät offenbart, bei dem über einen Injektor ein Brennstoff-Treibstrahl erzeugt wird

Aus der CH 116 460 A auf der die zweiteilige Form von Anspruch 1 basiert, geht ein Brenner für eine Ölfeuerung hervor. In der DE 31 52 948 A1 ist ein Druckverdampferbrenner beschrieben. Aus der JP S57 134606 A geht ein Verfahren zum Betreiben eines Brennersystems hervor.

Aufgabe der vorliegenden Erfindung ist es daher ein Brennersystem zum Erzeugen von thermischer Energie bereitzustellen, das einfach und kostengünstig aufgebaut ist und sicher und zuverlässig im Betrieb ist.

Eine weitere Aufgabe besteht darin ein umweltverträgliches und kompaktes Brennersystem bereitzustellen das flexibel einsetzbar ist.

Diese Aufgabe wird mit einer Vorrichtung gemäß Anspruch 1 und einem Verfahren gemäß Anspruch 8 gelöst. Vorteilhafte Ausgestaltungen davon sind in den Unteransprüchen angegeben.

Die vorliegende Erfindung betrifft ein Brennersystem zum Bereitstellen von thermischer Energie umfassend
eine Verdampfereinrichtung zum Verdampfen eines flüssigen Brennstoffes, um vollständig verdampften Brennstoff bereitzustellen,
eine Brennerluftzuführeinrichtung zum Bereitstellen von Brennerluft,
einen Oberflächenbrenner zum Verbrennen eines Brennstoffgemisches umfassend den vollständig verdampften Brennstoff und die Brennerluft, um einen Abgasstrom bereitzustellen,
eine Abschirmplatte mit Öffnungen zum Hindurchführen und zum Regeln der thermischen Energie des Abgasstromes des Oberflächenbrenners, wobei der Oberflächenbrenner mit der Verdampfereinrichtung über die Abschirmplatte derart gekoppelt ist, dass im Betrieb der Abgasstrom des Oberflächenbrenners die thermische Energie und die zur vollständigen Verdampfung des Brennstoffes benötigte Verdampfungstemperatur in der Verdampfereinrichtung bereitstellt, wobei die Abschirmplatte sowohl zur Strahlungsabschirmung der Verdampfereinrichtung ausgebildet ist, als auch zur Durchmischung des heißen Abgasstromes mit einer Tertiärluft um eine Gesamtabgastemperatur zu reduzieren, um diese auf ein geeignetes Niveau für die vollständige Verdampfung abzukühlen, und
eine Tertiärluftzuführeinrichtung zum Zuführen von Tertiärluft zum Abgasstrom, um eine Temperatur des Abgasstroms durch Vermischung mit der Tertiärluft zu steuern, um einen Heißgasstrom auszubilden.

Die Brennerluftzuführeinrichtung wird im Folgenden auch als Primär-/Sekundärlufteinrichtung bezeichnet.

Unter einer vollständigen Verdampfung des Brennstoffes, vorzugsweise Methanol, wird im Rahmen der vorliegenden Erfindung der vollständige Phasenübergang einer Flüssigkeit oder eines Flüssigkeitsgemisches in den gasförmigen Aggregatzustand ab bzw. oberhalb der Siedetemperatur der Flüssigkeit bzw. des Flüssigkeitsgemisches verstanden.

Die zur vollständigen Verdampfung benötigte Verdampfungstemperatur hängt vom verwendeten Brennstoff ab. Im Fall von Methanol ist das bspw. eine Verdampfungstemperatur im Bereich zwischen 64,7 °C und ca. 150 °C.

Die mittels der Tertiärlufteinrichtung zugeführt Tertiärluft ermöglicht eine Regelung bzw. eine Steuerung der Ausgangstemperatur des Nutz- bzw. Heißgasstromes im Brennerbetrieb.

Mit dem erfindungsgemäßen Brennersystem können Brennstoff und Brennerluft unabhängig voneinander geregelt bzw. gesteuert werden, um Leistungsanpassungen bzw. die Temperatur des Heißluftstromes sowohl durch Veränderung des Luftlambdas als auch über ein konstantes Luftlambda bei Verringerung (oder Erhöhung) des Brennstoffs und(/oder) der Luft vorzunehmen.

Zudem kann mittels der Tertiärluft eine Kühlung einer weiteren Vorrichtung, bspw. eines Brennstoffzellenstapels, erfolgen, wenn die Brennereinrichtung bzw. der Oberflächenbrenner nicht in Betrieb ist.

Vor einem Gebläse bzw. einem Lüfter der Tertiärluftzuführeinrichtung kann ein Thermosensor vorgesehen sein, um diesen vor Überhitzung zu schützen.

Die über die Tertiärlufteinrichtung geförderte Umgebungsluft (Teriärluft) wird dem Abgas derart beigemischt, dass dessen Temperatur sowohl auf eine gewünschte Ausgangstemperatur als auch ein geeignetes Niveau für die Verdampfung abgekühlt wird.

Bei der erfindungsgemäßen Brennereinrichtung kann die Temperatur der Verdampfereinrichtung somit aktiv geregelt werden. Eine Überhitzung des Verdampfers kann durch Zuführung von Tertiärluft verhindert werden.

In Kombination mit der Abschirmplatte bzw. dem Prallblech (Funktionseinrichtung) ermöglicht dieser Aufbau den Einsatz von sehr wärmeleitfähigen Materialien wie Aluminium in der Verdampfereinrichtung. Des Weiteren kann durch eine kontrollierte Temperatur der Verdampfereinrichtung auch eine thermische Zersetzung des Brennstoffes erfolgreich verhindert werden, welche ansonsten zum Verrußen und damit zu einem Zusetzen der Verdampfereinrichtung und zu einer Schädigung der Brennereinrichtung bzw. des Oberflächenbrenners führen könnte.

Die Abschirmplatte bzw. das Prallblech (Funktionseinrichtung) an sich ist vorzugsweise ein passives Element, die Regelung findet über die Tertiärluft- (Tertiärlufteinrichtung; Teriärluftgebläse) bzw. die Gasströme statt. Es findet keine Abgasrückführung statt. Eine solche ist auch nicht notwendig, da der Oberflächenbrenner grundsätzlich eine deutlich sauberere Verbrennung ermöglicht. Zusätzlich ist im Betrieb keine weitere Vorwärmung des Oberflächenbrenners durch Abgas notwendig, da der Brennstoffdampf in der Verdampfereinrichtung bereits ausreichend überhitzt wird und von der Brenneroberfläche via Wärmeleitung bereits ausreichend Energie zurückgeleitet wird. Des Weiteren wird über das Prallblech nicht nur der thermischen Energieeintrag in die Verdampfereinrichtung sondern auch das Temperaturniveau des Heißgasstromes geregelt, das dann bspw. zum Beheizen eines Brennstoffzellenstapels genutzt werden kann.

Prallblech und der Tertiärlufteinrichtung sind derart ausgebildet, dass sowohl das Temperaturniveau des Heißgases, mit dem die Verdampfereinrichtung beaufschlagt wird, eingestellt werden als auch die Ausgangstemperatur des Brenners gesteuert werden kann.

Der Oberflächenbrenner benötigt keine speziellen Maßnahmen zur Flammstabilisierung, da dies bereits über eine Metallfaseroberfläche erfolgen kann. Das Brennstoffdampf-Luft-Gemisch kann zwar in einer Schnecke des Brenners ebenfalls mit einem Drall versehen werden, dies dient jedoch ausschließlich der Vermischung und der Verteilung des Brenngases über den Querschnitt der Brennerfläche.

Die Abschirmplatte ist zum thermischen Abschirmen der Verdampfereinrichtung ausgebildet. Weiterhin kann vorgesehen sein, dass die Fläche der Öffnungen der Abschirmplatte mittels einer entsprechenden Einstelleinrichtung veränderbar ist bzw. vergrößert oder verkleinert werden kann, um eine entsprechende Steuerung durchzuführen.

Die Abschirmplatte sorgt somit zum einen für eine Strahlungsabschirmung der Verdampfereinrichtung, da der Oberflächenbrenner im Strahlungsbetrieb gefahren wird als auch zum anderen für eine Durchmischung des heißen Brennerabgases mit der Tertiärluft um die Gesamtabgastemperatur zu reduzieren. Dies hat auch den Effekt, dass die Temperatur mit der die Verdampfereinrichtung beaufschlagt wird, nicht im Bereich der thermischen Zersetzung des Brennstoffes liegt. Durch die damit kontrollierte Überhitzung des Brennstoffdampfes ist der Einsatz kostengünstigerer Ventile und Dichtungen in der Dampfleitung möglich.

Die Abschirmplatte kann z.B. ein Edelstahlblech mit einer geeigneten Dicke sein.

Die Abschirmplatte kann Bestandteil eines Verdampferraumes der Verdampfereinrichtung und somit integraler Bestandteil der Verdampfereinrichtung sein. Dann hat die Abschirmplatte bzw. das Prallblech insbesondere eine Wirkung bezüglich einer Temperaturverteilung und Vergleichmäßigung hin zum Verdampferraum.

Die Abschirmplatte kann, um den nachgeschalteten Wärmetauscher der Verdampfereinrichtung vor einem zu hohen Wärmeintrag durch Strahlung zu schützen, Kühlkörper zur Aufnahme von Strahlungsenergie aufweisen und durch Abgabe über Konvektion den Wärmeeintrag auf ein geeignetes Niveau bringen.

Die Funktionseinrichtung bzw. die Abschirmplatte ist zum Abschirmen und/oder Regeln eines Wärmestroms ausgebildet.

Ohne Abschirmplatte besteht die Gefahr, dass die Wärmeübertragung durch Wärmestrahlung (Brennereinrichtung wird im Strahlungsbetrieb betrieben um wenig Ausbrand und eine Brennkammer mit geringer Tiefe auszubilden, um den Bauraum möglichst klein zu halten) so stark ist, dass das Material einer den Verdampfungsraum umgebenden Wärmeübertragungseinrichtung schmelzen würde, selbst wenn das durchströmende Gas durch Tertiärluft bereits unter den Schmelzpunkt abgesenkt wurde.

Das Abschirmblech selbst kann mittels der Tertiärluft ebenfalls gekühlt werden, da sonst nach einiger Zeit dieses ebenfalls beginnen kann zu glühen und dann der Strahlungsanteil am Wärmetransport wieder ansteigt und zum selben Problem führen kann wie ohne Abschirmblech. Im Grunde ist das Abschirmblech ein Wärmetransporttransformator, bei dem Wärmeenergie in Form von viel Strahlung und wenig Konvektion aufgenommen wird und Wärmenergie mit viel Konvektion und wenig Strahlungsanteil abgegeben wird.

Die Verdampfereinrichtung kann mit der Brennereinrichtung derart über die Abschirmplatte gekoppelt sein, dass die thermische Energie des Abgasstroms der Brennereinrichtung im Betrieb nach einer Startphase zum vollständigen Verdampfen des flüssigen Brennstoffs in der Verdampfereinrichtung verwendet wird.

Beim erfindungsgemäßen Brennstoffsystem ist weder eine leistungsstarke Brennstoffpumpe, um den Brennstoff zu zerstäuben noch eine Einspritzdüse vorgesehen, um den Brennstoff zu zerstäuben. Daher ist erfindungsgemäß vorgesehen, den Brennstoff in der Verdampfereinrichtung vollständig zu verdampfen.

Die Verdampfereinrichtung kann vorzugsweise geschlossen ausgebildet sein. Unter einer geschlossenen Verdampfereinrichtung wir im Rahmen der vorliegenden Erfindung verstanden, dass eine Verdampfung des flüssigen Brennstoffes in einem Verdampferraum erfolgt, dessen Ausgang nur über einen Leitungsabschnitt (Dampfleitung) mit einem Einlass der Brennereinrichtung verbunden ist. Über einen entsprechenden Einlass wird dem Verdampferraum flüssiger Brennstoff zugeführt ansonsten ist dieser geschlossen ausgebildet.

Das erfindungsgemäße Brennersystem kann den Brennstoff mit einer einfach aufgebauten Brennstoffpumpe dem Verdampferraum zuführen, da die Verdampfereinrichtung in der Lage ist eine gleichmäßige Verdampfung bei unsteter Brennstoffförderung zu gewährleisten.

Die Verdampfereinrichtung des Brennersystems benötigt lediglich einen Verdampfungszweig und nicht zwei oder mehr Verdampfungszweige die über Ventile gesteuert werden müssen. Die Verdampfereinrichtung kann auf Basis von Erfahrungswerten (über Temperaturerfassung ist auch möglich) eine elektrische Heizung stufenweise ausschalten. Wie solche Erfahrungswerte ermittelt werden können wird im Folgenden an Hand des Ausführungsbeispiels noch detailliert beschrieben.

Weiterhin können beim erfindungsgemäßen Brennersystem Brennstoff und Brennerluft unabhängig voneinander geregelt werden, um Leistungsanpassungen sowohl über Veränderung des Luftlambdas als auch über konstantes Luftlambda bei Verringerung des Brennstoffs und der Luft vorzunehmen.

Die vorstehenden Vorteile werden im Ausführungsbeispiel detaillierter beschrieben.

Das Brennersystem kann vorzugsweise von einer, von den Bauteilen des Brennersystems geringfügig beabstandeten Gehäuseeinrichtung umgeben sein.

Die thermische Energie des Abgasstromes kann in Form von temperierter Luft bereitgestellt (Heißgasstrom) werden, wobei die thermische Energie direkt oder über eine separate Wärmetauschereinrichtung an eine mit dem Brennersystem gekoppelte Einrichtung abgegeben werden kann, wobei diese Einrichtung ein Verbrennungsmotor oder ein Brennstoffzellenstapel oder eine Batterie oder eine Luftführungseinrichtung zum Erwärmen eines Fahrzeuginnenraumes ist.

Die temperierte Luft ist zunächst noch verdünntes Abgas, dass dann einer Luft-Luft-Wärmetauschereinrichtung zugeführt werden kann, um temperierte Luft auszubilden.

Im Folgenden werden kurz die verschiedenen Arten von Brennstoffzellen und ihre jeweiligen Betriebstemperaturen (BT) aufgelistet, die in Verbindung mit dem erfindungsgemäßen Brennersystem beheizbar sind.
- Alkalische Brennstoffzelle (AFC); BT: 60 °C bis 100 °C;
- Polymer Elektrolyt-Membran Brennstoffzelle (PEMFC); BT: Niedertemperatur: 70 °C - 90 °C; Hochtemperatur: 120 °C -190 °C;
- Direkt Methanol Brennstoffzelle (DMFC); BT: 60 °C bis 130 °C;
- Phosphorsäure Brennstoffzelle (PAFC); BT: 170 °C bis 200 °C;
- Schmelzcarbonat Brennstoffzelle (MCFC); BT: Ca. 650 °C;
- Fest Oxid Brennstoffzelle (SOFC); BT: 900 °C bis 1000 °C;

Die temperierte Luft kann an einen Ölkreislauf eines Fahrzeuges oder einen Motor eines Fahrzeuges oder einen Kühlkreislauf eines Fahrzeuges abgegeben bzw. mit diesem, z.B. über einen Luft-Luft- oder einen Luft-Fluid-Wärmetauscher gekoppelt sein, um den Motor, vorzugswiese einen Verbrennungsmotor, vorzuheizen.

Dieses Brennersystem kann zudem einen thermischen Range-Extender ausbilden und ermöglicht es Batteriefahrzeuge unabhängiger von der Ladeinfrastruktur zu betreiben und erhöht, bei gewohntem Komfort, die Reichweite in der kalten Jahreszeit.

Weiterhin kann ein Fahrzeuginnenraum, statt mit elektrischer Energie aus einer teuren Batterie, mit günstigem - auch erneuerbar herstellbarem -Methanol geheizt werden.

Bspw. kann ein Fahrzeuginnenraum über das Brennersystem mittels eines Luft-Luft-Wärmetauschers beheizt werden. Hierbei kann ein ähnlicher Aufbau wie in der EP 23 15 493 A1 vorgesehen werden, die jedoch eine elektrische Widerstandsheizeinrichtung an Stelle des erfindungsgemäßen Brennersystems verwendet.

Durch eine Integration in das Kühlsystem eines Fahrzeuges kann zudem eine Fahrzeugbatterie auf Betriebstemperatur gehalten werden. Die Energiedichte des Methanols ist dabei im Vergleich zu einer Lithium-Ionen-Batterie je kg 35 mal höher.

In Methanol-Motoren ermöglicht das Brennersystem einen problemlosen Start ohne Dual Fuel System.

Mittels des erfindungsgemäßen Brennersystems wird somit thermische Energie aus sauberen Flüssig-Treibstoffen bereitgestellt. Im Rahmen der vorliegenden Erfindung sind insbesondere Alkohole, wie z.B. Methanol, Ethanol, 2-Propanol, 2-Butanol, etc., als flüssiger Brennstoff vorgesehen. Auch eine Verwendung von Brennstoffen wie Benzin oder Petroleum oder anderen flüssigen Brennstoffen mit Siedetemperaturen bis 350°C ist möglich.

Insbesondere sind mit dem erfindungsgemäßen Brennersystem die folgenden Vorteile erzielbar:
- CO₂ neutraler Betrieb mit regenerativem Methanol
- Arbeitet mit weltweit verfügbarem Methanol > 35% günstiger als Diesel
- Leiser Betrieb-unter 35 dB(A)
- Stufenlose Regelung der Heizleistung und Temperatur
- Kompakte Einbaumaße - hohe Energiedichte, geringer Ausbrand
- Emissionsarmer Betrieb durch Kombination von Flächenbrenner und sauberem Brennstoff
- Erhöhung der Reichweite batterieelektrischer Fahrzeuge bei niedrigen Temperaturen
- Geeignet für Dauerbetrieb
- Einfach an weitere Brennstoffe anpassbar
- Hält Batterien auch in anspruchsvollen Umgebungen auf Betriebstemperatur
- Basis auf einem Flächenbrenner mit Gebläse, der mit Methanoldampf betrieben wird
- Soll neben Aufheizen auch Kühlung der Brennstoffzelle übernehmen können
- Definierte Ausgangstemperatur des Heißgases ist einstellbar
- Geringer Druckverlust für Einsatz einfacher, kostengünstiger Lüfter
- Nutzbar mit bereits qualifizierten Dosierpumpen (unstetige Förderung)
- Robuster, zuverlässiger und sicherer Betrieb

Um die Konkurrenzfähigkeit von Brennstoffzellensystemen im Vergleich zu konventionellen Generatoren zu optimieren, ist es nun in Verbindung mit dem erfindungsgemäßen Brennersystem möglich, die eingangs erwähnten Probleme hinsichtlich der Startzeit und des elektrischen Heizsystems unter anderem bei der Aufheizung eines Brennstoffzellenstapels zu lösen.

Für den Startprozess wird ein Brennstoffzellenstapel, bspw. eines HAT-PEM-Brennstoffzellensystems nicht mehr elektrisch aufgeheizt, sondern mittels des Abgasstroms des Brennersystems auf 140°C bis 230°C bzw. auf 160 °C bis 180 °C und insbesondere auf ca. 165 °C aufgeheizt.

Erfindungsgemäß ist die Brennereinrichtung als Oberflächenbrenner ausgebildet, der eine Brennerbrille und ein damit verbundenes Metallfasergeflecht, einen Diffusor, eine Zündeinrichtung und vorzugsweise eine Flammüberwachungseinrichtung umfasst.

Der Oberflächenbrenner weist gegenüber einem katalytischen Brenner einen Kosten- und Bauraumvorteil auf.

Zudem bietet der Oberflächenbrenner hier mehr Freiheitsgrade, da er leicht mit etwas mehr oder weniger Last gefahren werden kann ohne dafür mehr teuren Katalysator einsetzen zu müssen. Außerdem weist ein auf katalytischer Reaktion basierender Brenner engere Grenzen bei der Leistungsmodulation auf (niedrigere Temperaturbegrenzungen (ca. 800°C) da darüber der Katalysator beschädigt wird; höheres Luftlambda notwendig dadurch höherer Abgasverlust; katalysatorabhängige Obergrenze für Verhältnis zwischen Katwabenvolumen und Volumenstrom, wird diese Überschritten setzt der Katalysator das Brenngas nicht mehr vollständig um).

Ein derartiger Oberflächenbrenner weist zudem nur einen geringen Ausbrand auf, wobei eine Brennkammer in etwa Höhe x Breite x Tiefe = ca. 95 mm x 141 mm x 49 mm beträgt.

Ein weiterer Vorteil des Oberflächenbrenners besteht darin, dass dieser auf Grund der laminaren Strömung sehr pulsationsfrei und geräuscharm ist.

Eine Gemischaufbereitung erfolgt vorzugsweise vor der Brenneroberfläche (Vormischbrenner). Hierfür kann eine Mischschnecke vorgesehen sein.

Grundsätzlich ist die Brennereinrichtung nur für durch vollständige Verdampfung eines flüssigen Brennstoffs entstandene gasförmige Brennstoffe geeignet. Vorzugsweise ist hierfür vollständig verdampftes Methanol vorgesehen.

Zur Flammüberwachung können bekannte Gasbrennerkomponenten in Form einer Flammüberwachungseinrichtung vorgesehen sein.

Die Primär-/Sekundärluftzuführeinrichtung kann zum Zuführen von Primärluft, um das Brennstoffgemisch auszubilden, wobei diese dem Brennstoffdampf vor der Verbrennung zugeführt wird, und/oder von Sekundärluft zum Kühlen der Brennereinrichtung, insbesondere des Diffusors und/oder der Brennkammer und/oder zur Nachverbrennung vorgesehen sein.

Die Primärluft wird mit dem verdampften Brennstoff (Methanol) vermischt, um ein Brennstoffgemisch auszubilden. Von diesem wird nur ein Teil genutzt falls nicht ausreihend Primärluft zur Verfügung stand für eine vollständige Primärseitige Verbrennung. Die Sekundärluft wird mit den primärseitigen Abgasen vermischt und je nach Betrieb wird dann noch ein Teil umgesetzt oder dient nur als Mischgas.

Der Brennstoff wird unter Umständen nur zum Teil genutzt (fettes Gemisch). Die Primärluft wird entweder vollständig genutzt (Lambda <= 1) oder es ist noch Sauerstoff übrig da magerer Betrieb (Lambda > 1).

Das Brennstoffluftverhältnis Lambda (λ) kann somit durch eine gezielte Brennstoffregulierung und/oder Luftregulierung eingestellt werden. Bei Betriebszuständen λ<1 liegt ein fettes Gemisch vor und die Energie des Brennstoffs wird u.U. nicht vollständig genutzt. Bei Betriebszuständen über λ>=1 wird die gesamte Primärluft (λ=1) genutzt oder es bleiben Sauerstoffmoleküle über (λ>1). Zum Einstellen kann eine entsprechende Steuereinrichtung vorgesehen sein.

Die Sekundärluft stellt der Brennereinrichtung je nach Betriebsweise Luft für eine ggfs. notwendige Nachverbrennung zur Verfügung. Durch die Sekundärluft steht dem Brenner selbst bei primärseitig fetter Verbrennung ausreichend Sauerstoff zur Verfügung um eine vollständige Verbrennung zu gewährleisten.

Die Sekundärluft kühlt die Brennkammerwände und den Diffusor, sodass ein Einsatz von Silikondichtungen am Diffusor möglich ist. Auf diese Weise wird die thermische Belastung am Brennkammergehäuse erheblich reduziert.

Eine Wärmetauschereinrichtung der Verdampfereinrichtung bzw. ein Verdampfungsraum der Verdampfereinrichtung wird von dem temperierten Heißgas zur Erwärmung der Verdampfereinrichtung, bzw. um die Energie für die Verdampfung bereitzustellen, durchströmt oder umströmt.

Vor dem Wärmetauscher und/oder im Abgasstrang kann die Temperatur mit geeigneten Temperatursensoren gemessen werden, um eine entsprechende Regelung bzw. Steuerung vorzusehen, um eine geeignete Ausgangstemperatur zu erzielen und die Verdampfereinrichtung nicht zu überhitzten.

Das Heißgas entsteht durch die Vermischung des Brennerabgases mit der Tertiärluft in einer Strömungsrichtung unmittelbar hinter einem Abschirmblech bzw. der Funktionseinrichtung und vor der Verdampfereinrichtung.

Um eine gleichmäßige Durchmischung und Strömungsverteilung über den gesamten Verdampferquerschnitt zu erreichen sind entsprechend ausgebildete Öffnungen im Abschirmblech derart positioniert, dass diese unmittelbar an den Einströmöffnungen eines Tertiärluftkanals in die Mischkammer liegen. Die beiden Luftströme treffen also in einem Winkel von 90° aufeinander und vermischen sich. Eine Vermischung der Tertiärluft mit dem Brennerabgas ist sinnvoll um den Brennstoffdampf nicht zu weit zu überhitzen und den Einsatz kostengünstiger Standardventile zwischen Verdampfer und Brenner zu ermöglichen.

Der Tertiärluftkanal kann auch als Schnecke ausgebildet sein in die die Verbrennungsluft geleitet wird. In der Schnecke wird zusätzlich zum Aufeinandertreffen der beiden Gasströme im 90° Winkel eine weitere Durchmischung erzielt.

Die Verdampfung in der Verdampfereinrichtung erfolgt somit über die Brennerabwärme bzw. über die im Abgasstrom enthaltene thermische Energie, um elektrische Energie im Betrieb einzusparen. Das Heißgas durchströmt dabei eine Wärmeübertragungseinrichtung des Verdampfungsraumes.

Weiterhin kann eine Brennstoffzuführeinrichtung bzw. Brennstoffpumpe zum Zuführen von flüssigem alkoholischen Brennstoff zur Verdampfereinrichtung vorgesehen sein. In Kombination mit einem Brennstoffzellensystem kann dies eine bereits vorhandene Anodenpumpe des Brennstoffzellensystems oder vorzugsweise eine Fluidpumpe sein.

Die Brennstoffzuführeinrichtung umfasst vorzugsweise einen Brennstofftank und eine Pumpe.

Zudem kann eine Mischeinrichtung vorgesehen sein, in der der in der Verdampfereinrichtung durch vollständige Verdampfung entstehende Brennstoffdampf mit der Primärluft vermischt wird. Die Mischeinrichtung ist schneckenförmig ausgebildet (Schnecke) und ist einteilig an einer Rückwandung eines Diffusors der Brennereinrichtung angeformt.

Durch den Einsatz des Abschirmbleches in Kombination mit der Kühlung des Brennerabgases über den Tertiärluftstrom kann als Werkstoff für den Verdampfer Aluminium mit seinen guten Wärmeleiteigenschaften zum Einsatz kommen, ohne durch die hohen Verbrennungstemperaturen, oberhalb des Schmelzpunktes von Aluminium, geschädigt zu werden.

Im erfindungsgemäßen Brennersystem können die Folgenden Medienströme vorgesehen sein:
- Brennerluft bestehend aus:
   Primärluft: Luft die unmittelbar für die Verbrennung genutzt wird und vor der Verbrennung bereits mit dem Brennstoffdampf vermischt wird.
   Sekundärluft: Luft die zur Kühlung des Diffusors und der Brennkammer um den Diffusor am Rand in die Brennkammer strömt. Steht für eine je nach Betriebsweise notwendige Nachverbrennung zur Verfügung. Durch die Sekundärluft steht dem Brenner selbst bei primärseitig fetter Verbrennung ausreichend Sauerstoff zur Verfügung um eine vollständige Verbrennung zu gewährleisten.
- Heißgas bestehend aus:
- Abgas: Gesamter Gasstrom welcher aus der Brennkammer austritt bestehend aus den Anteilen der Primär-/ Sekundärluft und den bei der Verbrennung entstehenden Gasen.
- Tertiärluft: Über zweites Gebläse (Tertiärluftgebläse) geförderte Umgebungsluft die dem Abgas beigemischt wird um dessen Temperatur sowohl auf eine gewünschte Ausgangstemperatur als auch ein geeignetes Niveau für die Verdampfung abzukühlen.
- Brennstoffdampf: Im Verdampfer durch vollständige Verdampfung entstehender Brennstoffdampf der in einer Mischeinrichtung mit der Primärluft vermischt wird.

Gemäß einem bevorzugten Ausführungsbeispiel der vorliegenden Erfindung ist in einem Leitungsabschnitt der einen Ausgang der Verdampfereinrichtung mit einem Brennstoffeinlass bzw. der Mischeinrichtung der Brennereinrichtung verbindet ein 3/2-Wege Ventil angeordnet.

Auf diese Weise ist es möglich die Brennstoffzufuhr von der Verdampfereinrichtung zur Brennereinrichtung zu unterbrechen, um ein normativ gefordertes Erlöschen der Flamme innerhalb von drei Sekunden zu gewährleisten.

Da sich im unteren Bereich der Verdampfereinrichtung auch flüssiges Methanol befindet, führt das Abschalten einer Brennstoffpumpe nicht zu einem rechtzeitigen erlöschen der Flamme, da das Methanol durch die vorhandene Abwärme der Brennereinrichtung noch vollständig verdampfen würde.

Durch das Vorsehen des 3/2-Wege Ventils kann der Ausgang der Verdampfereinrichtung während dem Aufheizen offengehalten werden. Das nach dem letzten Betrieb im Verdampfer verbliebene Methanol kann ausgasen ohne das es zu einem Druckanstieg in der Verdampfereinrichtung kommt.

Da der Innendruck des Verdampfers zum Zeitpunkt des Umschaltens des Ventils auf die Brennereinrichtung in etwa dem Umgebungsdruck entspricht kann sich kein Druck in die Brennereinrichtung entladen und diese entsprechend sanfter mit einem kontrollierten Brennstoff/Methanol-Luftgemisch angefahren werden.

Um kein Methanol an die Umgebung zu verlieren wird das während der Aufheiz- und Abkühlphase aus dem Verdampfer ausgasende Methanol in das Brennersystem zurückgeführt. Durch eine Schlauchverbindung gelangt das Methanol in eine Phasentrenn- bzw. Kondensationseinrichtung, wird dort auskondensiert und dem System wieder zugeführt. Hierbei wird das ausgasende Methanol somit dem Brennersystem zurückgeführt. Im Falle, dass das Brennersystem in Verbindung mit einem Brennstoffzellensystem verwendet wird, wird das ausgasende Methanol dem Brennstoffzellensystem bzw. einem Methanoltank des Systems zugeführt.

Ein weiterer Vorteil bei der Verwendung des 3/2-Wege Ventils besteht darin, dass das während dem Aufheizen verdampfende und ausgasende Methanol als Wärmeträger genutzt wird um den Verdampfer und die Rohrleitungen auch im oberen Teil gleichmäßiger vorzuheizen. Da eine Heizeinrichtung in einem unteren Teil der Verdampfereinrichtung integriert ist wird dieser entsprechend stärker vorgeheizt, da die Wärmeleitung des Materials begrenzt ist. Durch das Verdampfende Methanol kommt aber ein zusätzlicher Wärmetransportmechanismus dazu. Methanol welches an kalten Bereichen des Verdampfers wieder kondensiert kann bei normaler Einbaulage des Verdampfers wieder nach unten fließen und dort erneut verdampfen.

Um diesen Effekt zu verstärken wird ca. 10 Sekunden vor dem Umschalten des Ventils auf den Brenner bereits eine limitierte Menge Methanol in die Verdampfereinrichtung gepumpt, diese also bereits betrieben. Der Methanoldampf welcher zu diesem Zeitpunkt auch noch unverdampftes, flüssiges Methanol beinhalten kann wird dann entsprechend in das Brennersystem zurückgeführt.

Das ermöglicht zudem die Totzeit der Verdampfereinrichtung (Zeit zwischen Eintritt des flüssigen Methanols und Austritt des gasförmigen Methanoldampfes) für die Zündphase der Brennereinrichtung zu eliminieren, da diese bereits vor dem Beginn der Zündphase durchfahren wurde. Weiterhin ist ein erfindungsgemäßes Verfahren zum Bereitstellen von thermischer Energie vorgesehen, welches die vorstehend erläuterten technischen Merkmale und die entsprechenden Vorteile umfasst.

Ein Verfahren zum Bereitstellen von Thermischer Energie mittels eines vorstehend beschriebenen Brennersystems umfasst die folgenden Schritte:
Erwärmen der Verdampfereinrichtung mit einer elektrischen Heizeinrichtung während einer Startphase, vollständiges Verdampfen des flüssigen Brennstoffes in der Verdampfereinrichtung, Zuführen des vollständig verdampften Brennstoffes zu einer als der Oberflächenbrenner ausgebildeten Brennereinrichtung, und Verbrennen des verdampften Brennstoffes in der Brennereinrichtung, um thermische Energie in Form eines Abgasstromes bereitzustellen,

Verwendung eines Teiles der thermischen Energie im Betrieb des Brennersystems, um den Brennstoff in der Verdampfereinrichtung während des Betriebs zu Verdampfen, so dass die Energie zum Verdampfen in der Verdampfereinrichtung ausschließlich von der Brennereinrichtung bereitgestellt wird. Der Diffusor kann auch elektrisch vorgeheizt und beheizt werden. Vorzugsweise ist hierfür einer zweite Heizeinrichtung vorgesehen die unabhängig von der Heizeinrichtung der Verdampfereinrichtung regelbar bzw. steuerbar ist.

Eine Regelung bzw. Steuerung der thermischen Energie des Abgasstromes kann zwischen Brennereinrichtung und Verdampfereinrichtung über in einer Abschirmplatte bzw. einer Funktionseinrichtung ausgebildete Öffnungen erfolgen.

Die Brennereinrichtung umfasst einen Oberflächenbrenner für durch vollständige Verdampfung eines flüssigen Brennstoffs entstandene gasförmige Brennstoffe, wobei der vollständig verdampfte Brennstoff im Oberflächenbrenner verbrannt wird.

Primärluft kann zugeführt werden, um ein Brennstoffgemisch auszubilden, wobei die Primärluft dem Brennstoffdampf vor der Verbrennung zugeführt und/oder Sekundärluft kann zugeführt werden, die zum Kühlen eines Diffusors und/oder einer Brennkammer der Brennereinrichtung vorgesehen ist, und/oder zu einer Nachverbrennung verwendet wird, wobei die Primär und die Sekundärluft von einer Brennerluftzuführeinrichtung, die als Primär-/Sekundärlufteinrichtung, bezeichnet wird zugeführt wird.

Tertiärluft wird zugeführt, um eine Temperatur des thermischen Abgasstroms durch Vermischung mit der Tertiärluft einzustellen, so dass daraus ein Heißgasstrom ausgebildet wird, wobei eine Regelung der Ausgangstemperatur des Heißgasstromes im Brennerbetrieb über die Tertiärluft erfolgt. Über ein 3/2-Wege Ventil kann ein Ausgang der Verdampfereinrichtung während einer Startphase, insbesondere einem Aufheizen der Verdampfereinrichtung offengehalten werden und/oder, es kann bei einer Beendigung des Betriebs der Brennereinrichtung in der Verdampfereinrichtung verbliebenes Methanol über das 3/2-Wege Ventil ausgasen ohne dass es zu einem Druckanstieg in der Verdampfereinrichtung kommt, wobei ein Innendruck der Verdampfereinrichtung zum Zeitpunkt des Umschaltens des Ventils auf die Brennereinrichtung in etwa dem Umgebungsdruck entspricht, sodass sich kein Druck in der Brennereinrichtung entlädt und diese mit einem kontrollierten Brennstoff-Luftgemisch angefahren wird.

Zudem wird kann auch eine Mischeinrichtung (bzw. deren Diffusor) in einer Startphase mit einer elektrischen Heizeinrichtung vorgeheizt werden.

Die Erfindung wird im Folgenden anhand der Zeichnungen näher erläutert. Diese zeigen in:
- Fig. 1: eine schematische Darstellung eines Brennstoffzellensystems, das mit einem erfindungsgemäßen Brennersystem kombinierbar ist,
- Fig. 2: eine perspektivische Explosionsdarstellung des erfindungsgemäßen Brennersystems,
- Fig. 3: eine schematische Darstellung der Medienströme des Brennersystems,
- Fig. 4: das Brennersystem mit Medienströmen in einer Seitenansicht,
- Fig. 5: das Brennersystem mit Medienströmen in einer weiteren Seitenansicht, und
- Fig. 6: das Brennersystem mit Medienströmen in einer weiteren Seitenansicht.

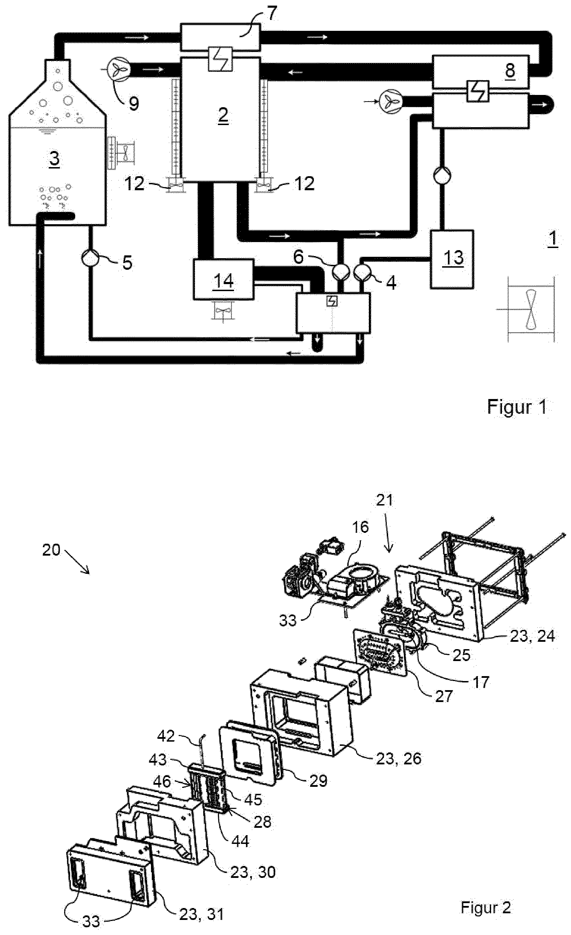

Im Folgenden wird zunächst ein Brennstoffzellensystem 1 beschrieben, welches mit einem erfindungsgemäßen Brennersystem 20 kombinierbar ist, um die vorstehend aufgezeigten Vorteile zu erzielen (Figur 1). Dieses Brennstoffzellensystem 1 entspricht im Wesentlichen den in der WO 2010/066900 A1 und der WO 2015/110545 A1 beschriebenen Brennstoffzellensystemen.

In der WO 2010/066900 A1 ist eine Befeuchtungseinheit zum Bereitstellen eines Brennstoff- und Wasserdampfenthaltenden Trägergases zur Versorgung einer Brennstoffzelle offenbart.

Aus der WO 2015/110545 A1 geht ein Brennstoffzellensystem zur thermisch gekoppelten Reformierung mit Reformataufbereitung hervor.

Das Brennstoffzellensystem 1 umfasst einen Brennstoffzellenstapel 2. Dieser ist als HT-PEMFC (High-Temperature-Polymer-Electrolyt-Fuel-Cell) ausgebildet. Diese Hochtemperaturbrennstoffzelle arbeitet in einem Temperaturbereich von 160 °C -180 °C. Der benötigte Wasserstoff wird aus Methanol durch einen Reformierungsprozess gewonnen und in der Brennstoffzelle 2 verstromt.

Für die Zellversorgung dient ein mit Wasser- und Methanoldampf gesättigter Trägergasstrom, der durch eine Befeuchtungseinheit 3 bereitgestellt wird. Diese ermöglicht durch den Wasserzyklus eine Rückgewinnung von Wasser aus dem Abgas. So entfällt eine externe Zugabe von Wasser und der Gebrauch von Premixen.

Die Komponenten und die Funktionsweise des Brennstoffzellensystems 1 werden an Hand eines Anodenkreislaufs erläutert.

Beim Anodenkreislauf wird über zwei Dosierpumpen 4, 5 Methanol aus einem Methanolvorratsbehälter 13 und Wasser in die Befeuchtungseinheit (Medieneinheit) 3 gefördert. In der Befeuchtungseinheit 3 wird ein Trägergasstrom mit Methanol angereichert. Der Methanolvorratsbehälter 13 kann auch zur Versorgung des Brennersystems 20 verwendet werden.

Der Trägergasstrom wird durch eine Anoden- bzw. Brennstoffpumpe 6 von einem Anodenauslass zur Befeuchtungseinheit 3 gefördert. Die Sättigung des Trägergasstroms mit Wasser und Methanoldampf findet in einem Temperaturbereich von etwa 80 °C statt, das gesättigte Gas strömt anschließend weiter zur internen und zur externen Reformereinrichtung 7, 8.

Innerhalb der allothermen Dampfreformierung zersetzt sich Wasser- und Methanoldampf zu Wasserstoff, Kohlenstoffdioxid und Kohlenstoffmonoxid. Das entstehende Reformatgas enthält überwiegend Wasserstoff und wird zu dem Brennstoffzellenstapel 2 weitergeleitet.

Nachdem der Wasserstoff in dem Brennstoffzellenstapel 2 verstromt wurde, befindet sich im Reformatgas zum überwiegenden Teil noch Kohlenstoffdioxid. Das abgereicherte Reformatgas strömt aus der Anode und beginnend von der Anodenpumpe startet der Kreislauf von neuem.

Die Versorgung der Brennstoffzelle mit Sauerstoff (Luft) übernimmt ein Kathodengebläse 9. Der Luftstrom des Kathodengebläses 9 nimmt das durch die Verstromung entstehende Wasser auf, welches in einem Wärmetauscher und Phasentrenner 14 auskondensiert wird. Das rückgewonnene Wasser wird durch die Dosierpumpe 5 in die Befeuchtungseinheit 3 zurückgepumpt.

Die Beheizung der Befeuchtungseinrichtung 3 wird durch die heißen Abgase der Reformereinrichtung 7, 8, eines katalytischen Brenners und der Kathodenabwärme realisiert. Um den Brennstoffzellenstapel 2 auf Betriebstemperatur zu halten, wird dieser mittels einer Luftzuführeinrichtung 12 gekühlt. Diese Luftzuführeinrichtung 12 kann als Tertiärluft- bzw. Brennerlufteinrichtung des Brennersystems 20 verwendet werden.

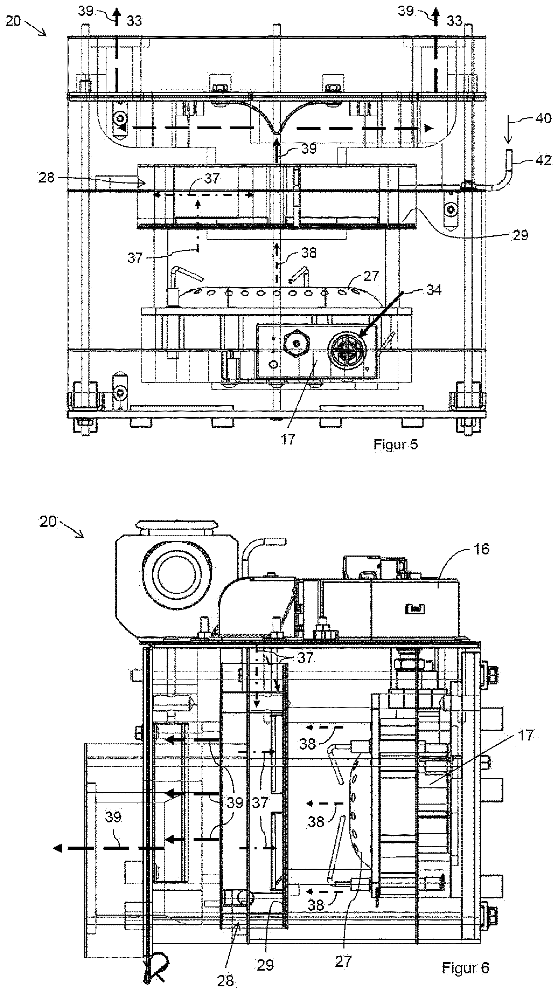

Das erfindungsgemäße Brennersystem 20 kann als Aufheizungssystem für Brennstoffzellenstapel 2 von Brennstoffzellensystemen 1 verwendet werden und wird im Folgenden beschrieben (Figuren 2 bis 6).

Da eine HT-PEMFC eine gewisse Starttemperatur benötigt, kann diese Temperatur von ca. 165 °C durch Aufheizen des Brennstoffzellenstapels 2 mittels des Brennersystems 20 erreicht werden.

Bisher wurde der Brennstoffzellenstapel von einer elektrischen Heizeinrichtung aufgeheizt. Dabei wurden Heizplatten um den Brennstoffzellenstapel herum angeordnet und nach Außen isoliert. Über den gesamten Aufheizprozess benötigen diese Heizplatten Strom. Der Aufheizprozess dauert zirka eine Stunde und benötigt eine hohe elektrische Leistung. Eine angeschlossene Batterie wird somit erst entladen, um die Brennstoffzelle aufzuheizen. Sobald die Brennstoffzelle auf Temperatur ist, lädt sie die Batterie und der Strom kann genutzt werden.

Eine Reduzierung des Strombedarfs ist durch das Brennersystem 20 in Form einer nicht-elektrischen Energiequelle möglich.

Das Brennersystem 20 verwendet vorzugsweise Methanol in Verbindung mit einer als Ober- bzw. Flächenbrenner ausgebildeten Brennereinrichtung 21. Auf diese Weise kommt es nur zu einer geringen NOₓ-Bildung und zu hohen Abgastemperaturen.

Die erzeugte Wärme wird über eine Tertiärlufteinrichtung 16 mit Gebläse an die Brennstoffzelle 2 abgeführt.

Im Folgenden wird das erfindungsgemäße Brennersystem 20 detailliert beschrieben (Figuren 2 bis 6).

Das Brennersystem 20 weist eine Gehäuseeinrichtung 23 auf. Die Gehäuseeinrichtung 23 ist durch vier miteinander verbundene Plattenmodule ausgebildet, die vorzugsweise aus Vermiculit hergestellt sind. Diese Plattenmodule sind über Gewindestangen miteinander verbunden und werden mit Schaumstoff verspannt. Vermiculit weist eine geringe Wärmeleitfähigkeit auf und kann als ein nicht nichtbrennbarer Plattenwerkstoff ausgebildet sein. Weltweit wird dieses Produkt unter den Markennamen "Fipro", "Miprotec", "bro-TECT", "Vermilite 2000" und "Thermax" angeboten. Vermiculit weist einen hohen Schmelzpunkt von 1315°C auf, ist elektrisch nicht leitend bzw. isolierend. An Stelle von Vermiculit kann bspw. auch Silcawool 115-36A Board eingesetzt werden. Allgemein kann man auch die Funktionen trennen und ein Metallgehäuse mit extra Isolierung (z.B. Hochtemperaturglaswolle) fertigen. Die Gehäuseeinrichtung übernimmt insbesondere die Funktionen Isolierung und Medienführung.

Eines dieser Plattenmodule stellt eine Endplatte 24 dar. In der Endplatte 24 sind ein Lufteinlass und eine Auflagefläche für einen Diffusor 25 der Brennereinrichtung 21 ausgebildet.

In einer in vertikaler Richtung oben liegenden Seitenkante bzw. einer Oberwandung der Endplatte 24 ist eine rechteckförmige Ausnehmung für die Durchführung einer Methanol- und einer Luftleitung zur Versorgung des Diffusors 25 vorgesehen.

Auf die Endplatte 24 wird ein weiteres, eine Mittelplatte 26 darstellendes Plattenmodul montiert. Eine der Endplatte 25 zugewandte Seitenwandung der Mittelplatte 26 ist zur Aufnahme einer Brennerbrille 27 der Brennereinrichtung 21 vorgesehen und die gegenüberliegende Seitenwandung weist eine Ausnehmung zur Aufnahme eines Prallblechs einer Verdampfereinrichtung 28 auf. Das Prallblech bildet eine Funktionseinrichtung 29 aus.

Wie die Endplatte 24 weist diese Mittelplatte 26 eine Ausnehmung für die Methanol-und Luftleitung auf.

Im Bereich zwischen der Endplatte 24 und der Mittelplatte 26 ist somit ein Bauraum für die Brenneinrichtung 21 ausgebildet.

Mit der Mittelplatte 26 wird eine Auslassplatte 30 verbunden. Zwischen der Mittel- 26 und der Auslassplatte 30 ist ein Bauraum für die Verdampfereinrichtung 29 vorgesehen.

Mit der Auslassplatte 30 ist eine Frontplatte 31 verbunden.

Die Gehäuseeinrichtung 23 ist durch den plattenförmigen Aufbau in etwa quaderförmig ausgebildet. Auf einer Oberwandung der Gehäuseeinrichtung 23 ist eine Oberplatte 33 befestigt.

Die Oberplatte 33 dient zur Aufnahme der Tertiärlufteinrichtung 16, und einer Brennerluftzuführeinrichtung 41, eines Magnetventils und eines Luftschachts. Die Brennerluftzuführeinrichtung 41 umfasst eine Messblende, eine entsprechende Verschlauchung und eine Luftvorheizung (Heizkreuz vergleichbar einem Heißluftfön). Ohne die Luftvorheizung bzw. Diffusorvorheizung startet der Brenner nicht oder nur schlecht, da das Methanol im Diffusor kondensiert. Die Heizung selbst ist im Diffusor angeordnet.

Alternativ kann der Diffusor auch mit einer direkt integrierten Heizpatrone vorgeheizt werden. In diesem Fall weist das Brennersystem zwei Heizpatronen auf.

Die heißen Abgase werden über in der Frontplatte 31 ausgebildete Strömungskanäle 33 aufgeteilt und zum Brennstoffzellenstapel 2 geleitet. Für eine optimale Luftführung des heißen Abgases sind die Strömungskanäle 33 der Frontplatte 33 mit dem Brennstoffzellenstapel 2 gekoppelt.

Alle Plattenmodule sind aus Vermiculit gefertigt und werden anhand von Durchgangslöchern an den Seiten der Platten mit Gewindestangen verspannt.

Weiterhin umfasst das Brennersystem die Verdampfereinrichtung 28 und eine Heizpatrone. In der Verdampfereinrichtung 28 erfolgt die Verdampfung des Methanols.

Die Verdampfereinrichtung 28 umfasst ein Einlassrohr 42, ein wannenartiges Ober- und Unterelement, die über dazwischen angeordnete Wärmeübertragungseinrichtung 45 mit Wärmetauscherstruktur miteinander verbunden sind und ein Auslassrohr. Das wannenartige Ober- und Unterelement und die dazwischen angeordnete Wärmeübertragungseinrichtung 45 bilden einen Verdampferraum aus.

Das Einlassrohr 42 zum Einbringen des flüssigen Methanols mündet in das Unterelement 44 der Verdampfereinrichtung 28. Die Heizpatrone mit einer Leistung von 250 W ist in die Unterwandung integriert. Hierfür ist eine Brennstoffpumpe 47 vorgesehen, die Methanol aus einem Brennstoffvorratsbehälter 48 fördert.

Beim Betrieb der Verdampfereinrichtung 48 mit dem Abgasstrom der Brennereinrichtung 21 gewährleistet die Wärmeübertragungseinrichtung 45 einen guten Wärmeübertrag zur Verdampfung des Methanols. An der Oberseite konzentriert sich das verdampfte Methanol und wird durch ein angeschweißtes Rohr über ein Magnetventil zum Diffusor geleitet. Um die Oberfläche der Phasengrenzfläche zu vergrößern ist die Wärmeübertragungseinrichtung 45 mit feiner Metallwolle, vorzugsweise Edelstahlwolle, gefüllt. Eine obere Wanne (Oberelement) der Verdampfereinrichtung 28 ist ebenfalls mit Edelstahlwolle gefüllt, eine untere Wanne (Unterelement) in die das Methanol zuerst strömt ist mit einem festen Metallschaum gefüllt, der auch die Heizpatrone aufnimmt und die Wärmeleitung von der Heizpatrone an die Verdampfereinrichtung 28 gewährleistet bzw. verbessert.

Alternativ kann die Unterwanne auch derart ausgebildet sein, dass diese aus einem Edelstahlvollmaterial herausgearbeitet wird und die Heizpatrone in einer extra Bohrung sitzt die keine Fluid-Verbindung zur Methanolverteilerkammer aufwest. Die Verteilerkammer wird ist vorzugsweise mit Metallschaum bestückt.

Die Brennereinrichtung 21 umfasst unter anderem die Brennerbrille 27, den Diffusor 25 und Elektroden.

Die Brennbrille 27 ist aus einem gelochten Edelstahlblech mit einem Metallfaserüberzug ausgebildet. Im Randbereich angeordnete Löcher der Brennerbrille 27 sind für einen Sekundärluftstrom 36 vorgesehen. Zudem sind Befestigungslöcher zur Befestigung von Elektroden vorgesehen.

Durch die in einer Wölbung der Brennerbrille 27 ausgebildeten Primärlöcher strömt das Brennstoffgemisch.

Auf der der Mittelplatte 26 zugewandten Seite der Brennerbrille 27 ist ein Metallfasergeflecht angeschweißt oder eine poröse keramische Struktur vorgesehen. Dieses besteht aus einer hitzebeständigen Fe-Cr-Al-Legierung, die Schutz gegen Oxidationen und hohe Temperaturen bietet. Dadurch entsteht ein effektiver Schutz gegen Überhitzung und zudem wird Verformungen und Brüchen des Brenners vorgebeugt.

Wenn die Metallfaser bei niedriger Heizleistung betrieben wird, erfolgt die Verbrennung auf der Metalloberfläche und die Fasern glühen hell auf. Die Metfallfaser wird dann im Strahlungsmodus betrieben.

Die Verwendung einer Metallfaser bietet folgende Vorteile:
- Präzise Verbrennung mit deutlicher Geräuschminderung
- Hohe Flammenstabilität ohne Flammenrückschlag
- Formbeständigkeit

Die Mischung des durch vollständige Verdampfung eines flüssigen Brennstoffs entstandenen gasförmigen Brennstoffs sowie der Luft durch das Startbrennergebläse wird durch einen, in der Endplatte aufgenommenen, Diffusor realisiert.

Auf einer Oberseite des Diffusors 27 sowie der Endplatte befinden sich Einlassöffnungen für die Brennstoff- und die Brennerluftzufuhr 34.

Das verdampfte Methanol wird direkt in eine Schnecke des Diffusors 27 dosiert. Die Schnecke bildet eine Mischeinrichtung 17 aus. Die Luft wird durch eine Rückschlagmembran geleitet und danach in Primär- 35 und Sekundärluft 36 aufgeteilt. Die Primärluft 35 mischt sich in der Schnecke mit dem Methanoldampf und die Sekundärluft 37 strömt um den Diffusor 25 in die Sekundärlöcher. Das Brennstoffgemisch aus Gas und Luft reichert sich in einem Brennvorraum an und strömt durch die Primärlöcher der Brennerbrille 27.

Die Primärluftzufuhr ist durch eine Edelstahlabdeckung auf der Schnecke regulierbar.

Weiterhin sind zwei Elektroden (HighVoltage (HV) und Flammenüberwachung (FW)) über die Brennerbrille mit dem Diffusor verschraubt und erstrecken sich in der Brennkammer über den Primärbereich der Brennerbrille. Der Zündfunke wird zwischen Zündelektrode (HV) und Brennerbrille ausgebildet, die auf Ground liegt um ein besseres Flammüberwachungssignal zu erhalten.

Weiterhin umfasst das Brennersystem 20 die Tertiärlufteinrichtung 16 und eine Messblende.

Die Tertiärlufteinrichtung 16 umfasst einen PWM (Pulsweitenmodulation)-fähigen Radiallüfter. Die PWM ermöglicht eine genaue Einstellung der Lüfterdrehzahl und damit einen kontrollierten Durchfluss der Tertiärluftuft. Eine Sensorleitung liefert Auskunft über die aktuelle Lüfterdrehzahl und kann durch eine Logiküberprüfung einen Ausfall des Lüfters anzeigen.

Neben dem Kühlen der Brennstoffzelle 2 heizt der Tertiärlüfter 16 die Brennstoffzelle 2 durch die heiße Abluft (Heißgasstrom 39 umfassend Abgasstrom 38 und Tertiärluft 37) der Brennereinrichtung 21 auf. Der Lüfter ermöglicht eine ausreichende Kühlung eines Brennstoffzellensystems 1 bei jeder Leistungsstufe.

Ein weiteres Gebläse bildet eine Brennerlufteinrichtung 41 zum Zuführen von Brennerluft 34 (Primär 35- und Sekundärluft 36) aus. Die Brennerlufteinrichtung 42 ist, wie die Tertiärlufteinrichtung 16ein Radialgebläse, das Luft über eine Durchflussmesseinrichtung zum Diffusor 25 befördert. Durch den dreipoligen Anschluss ist eine Regulierung der Drehzahl über eine entsprechende Steuereinrichtung möglich.

Für die Bereitstellung des Zündfunkens und die Überwachung der Flamme dient ein Feuerungsautomat. Dieser detektiert einen Flammenausfall in maximal 0,8 Sekunden. Ein Ausfall der Flamme führt zu einem internen Fehler, der zusätzlich ein Magnetventil für die Brennstoffzufuhr schließt. Die Zündperioden sind in eine Elektronik des Feuerungsautomaten integriert. Für das Startsystem wird eine Zündphase von ca. 4 bis 20 Sekunden genutzt, um eine sichere Zündung des Brennstoffgemischs zu gewährleisten. Falls die Brennereinrichtung 21 innerhalb der Zündphase nicht gestartet wurde, gibt die Steuereinrichtung einen Fehler aus.

Das 3/2 Wegeventil 19 dient zum Öffnen und Schließen der Gasleitung des Brenners und ist zwischen der Verdampfereinrichtung 28 und dem Diffusor 25 angeordnet. Bei Störungen schließt sich das Ventil innerhalb kürzester Zeit und stoppt die Brennstoffzufuhr zur Brennereinrichtung. Dadurch ist bei Störungen ein sicheres Abschalten des Brenners gewährleistet. Das Ventil befindet sich im Offenen-Zustand sobald der Feuerungsautomat den Zündvorgang durchführt und ist im Grundzustand geschlossen

Eine weitere Sicherheitseinrichtung stellt ein Sicherheitstemperaturbegrenzer dar. Dieser ist in einem Brennvorraum angeordnet, wobei der Messfühler am Diffusor fixiert ist. Das Prinzip basiert auf einem Temperaturfühler, der mit einer Flüssigkeit gefüllt ist. Wird der eingestellte Temperaturbereich überschritten, dehnt sich die Flüssigkeit vom Fühler über die Übersetzungsmechanik zum Sprungschalter hin aus und der Stromkreis wird geöffnet, das Magnetventil schließt. Einflüsse der Umgebungstemperatur werden durch eine Bimetallscheibe kompensiert. Der Vorteil des Bauteils ist seine elektromechanische Ausführung, die eine Temperaturmessung ohne zusätzliche Hilfsenergie erlaubt. Um den Stromkreis wieder zu öffnen muss der Sprungschalter manuell betätigt werden.

Alternativ kann auch eine Schmelzsicherung zum Einsatz kommen. Diese wird an der Rückseite des Diffusors in einer dafür vorgesehenen Vertiefung montiert. Bei Überschreiten der zulässigen Temperatur im Falle eines Rückbrandes öffnet diese den Stromkreis zum Ventil, welches daraufhin schließt. Um den Stromkreis wieder zu schließen muss die Schmelzsicherung ausgetauscht werden. Ein entsprechender Schmelzsicherungsdraht der Thermosicherung brennt irreversibel bei ca. 200 °C durch.

Über eine Funktionseinrichtung, die als Prallblech mit Öffnungen ausgebildet ist, ist die Brennereinrichtung räumlich von der Verdampfereinrichtung getrennt.

Das Grundkonzept des Brennersystems 20 beruht somit auf einem Flächen- bzw. Oberflächenbrenner mit Gebläse, der mit Methanoldampf betrieben wird. Zusätzlich befindet sich im System die Verdampfereinrichtung, um das flüssige Methanol zu verdampfen. Um die heiße, bzw. kalte Luft abzuführen dient ein Radialgebläse mit hohem Durchsatz.

Die Gehäuseeinrichtung 23 ist aus vier Vermiculitplatten ausgebildet, die mittels eines Verspannungssystems miteinander verspannt werden. Die Vermiculitplatten sind bereits für die innenliegenden Bauteile ausgefräst und bieten zum Auslass des heißen Gases zwei Abluftkanäle. In dem Gehäuse sind die Verdampfereinrichtung, das Prallblech der Funktionseinrichtung 29 und die Brennereinrichtung 21 umfassend den Diffusor 25 und die Brennerbrille 27 angeordnet. Zudem befindet sich eine Montageeinrichtung für die Brennerlufteinrichtung 41 mit Magnetventil auf der Oberseite des Startsystems.

Die Frischluftversorgung wird einerseits durch die Brennerlufteinrichtung (Primär- 35 und Sekundärluft 36) und andererseits durch die Tertiärlufteinrichtung 16 (Tertiärluft 37) gewährleistet. Die Brennerluft 34 strömt über den Diffusor 25 und wird dort in Primär- 35 und Sekundärluft 36 aufgeteilt. Die Primärluft 35 wird dem Gasstrom der Verdampfereinrichtung 28 zugemischt und strömt durch einen zentralen Bereich der Brennerbrille. Die Sekundärluft wird durch die äußeren Löcher der Brennerbrille 27 geleitet und dient zur Kühlung und weiteren Sauerstoffversorgung des Brennprozesses.

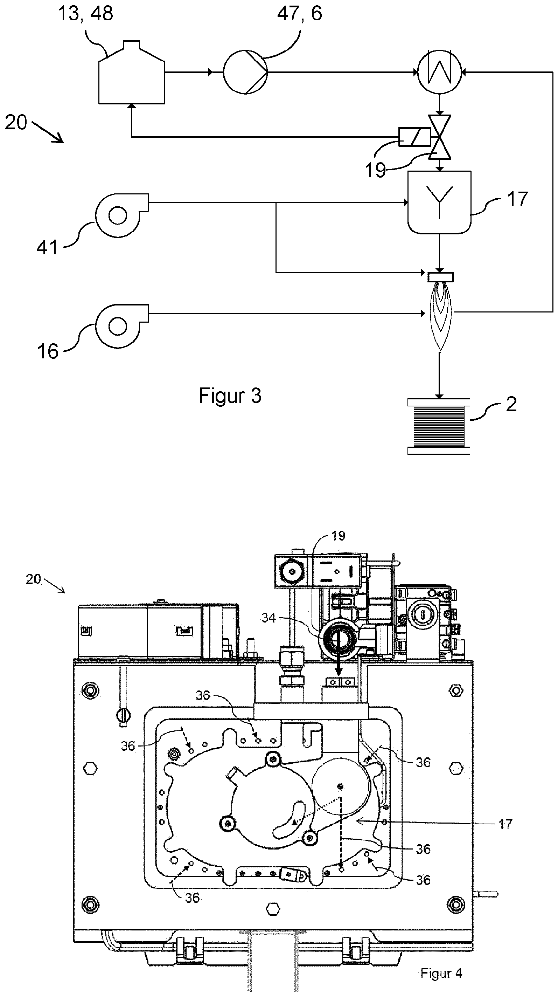

Im Folgenden wird ein Verfahren zum Bereitstellen von thermischer Energie unter Verwendung des vorstehend beschriebenen Brennersystems erläutert (Figur 3).

Im Startprozess wird aus dem Tank durch eine Pumpe und ein 3/2-Wege Ventil 19 flüssiges Methanol in die Verdampfereinrichtung 28 gefördert. In der Verdampfereinrichtung 28 wird das flüssige Methanol zunächst durch eine elektrisch betriebene Heizpatrone verdampft, durch ein Magnetventil geleitet und mittels einer Schnecke mit von der Primär-/Sekundärlufteinrichtung bzw. der Brennerlufteinrichtung 41 bereitgestellten Primärluft 35 gemischt.

Das zündfähige Brennstoff-Luft-Gemisch wird danach im Brennraum gezündet und durch die Sekundärluft 36 zusätzlich mit Sauerstoff versorgt.

Ein Verdampferausgang ist in der Aufheizphase offen und damit drucklos, daher ist kein Rückschlagventil als Pumpenschutz notwendig. Sobald das 3/2-Wege Ventil betätigt wird, wird eine Verbindung zwischen der Verdampfereinrichtung und dem Diffusor geöffnet während die Verbindung zum Ausgang geschlossen wird. Methanol, welches in der Aufheizphase aus dem Verdampfer entweicht wird Systemintern zurückgeführt in dem es analog zum Überlauf des Methanolreservoirs in einen Phasentrenner-kathoden-kondensat geleitet wird. Von dort gelangt es dann in die Befeuchtungseinheit und wird verstromt.

Bezüglich der Ausgestaltung, der Anordnung und der weiteren Vorteile des 3/2-Wege Ventils wird auf die entsprechenden Absätze in der Beschreibungseinleitung verwiesen.

Anschließend gelangt das heiße Abgas 38 durch das Prallblech der Funktionseinrichtung 29 und wird dort mit der Tertiärluft vermischt, um dessen Temperatur zu reduzieren. Zuerst wird somit der Tertiärluftstrom dem Abgas beigemischt und anschließend strömt der daraus gebildete Heißgas- bzw. Nutzgasstrom 39 durch die Verdampfereinrichtung 29 und dann weiter zum Brennstoffzellenstapel. Andernfalls könnte der Verdampfer überhitzen. Die Verdampfereinrichtung 28 muss auf diese Weise dann nicht mehr elektrisch beheizt werden. Insbesondere erhitzt der Heißgasstrom eine Wärmeüberträgerstruktur des Brennstoffzellenstapels und erwärmt diesen auf Betriebstemperatur. Sobald der Brennstoffzellenstapel die gewünschte Betriebstemperatur erreicht hat, wird ein Kühlprozess mittels des Brennersystems eingeleitet.

Die Pumpe 6 bzw. 47 und die Primär-/Sekundärlufteinrichtung 41 fahren schrittweise herunter und die Tertiärlufteinrichtung 16 kühlt den Brennstoffzellenstapel 2 auf die gewünschte Betriebstemperatur.

Das Brennersystem 20 wird mit einem flüssigen Brennstoff, wie Methanol betrieben. Dabei muss ein Phasenübergang der flüssigen Komponente in die Gasphase sichergestellt werden. Der Phasenübergang ist notwendig, um eine Mischung des Energieträgers mit dem Oxidationsmittel zu gewährleisten.

Dieser Vorgang wird als Gemischaufbereitung bezeichnet und führt zur Minderung der Schadstoffemissionen und findet zunächst in der Verdampfereinrichtung und in einer nachgeschalteten Mischeinrichtung statt. Die Mischeinrichtung ist schneckenförmig ausgebildet (Schnecke) und ist einteilig an einer Rückwandung eines Diffusors der Brennereinrichtung angeformt. Der Diffusor verteilt das gemischte Brenngas über den Brennerquerschnitt, damit dieses gleichmäßig durch einen Primärbereich der Brennerbrille strömen kann. Die Brennerbrille trägt durch den Druckverlust beim Durchströmen ebenfalls zur Gleichverteilung des Brenngases über den Brennerquerschnitt bei.

Es sind vier Teilschritte zur thermischen Umsetzung von flüssigen Brennstoffen notwendig.
- Brennstoffaufbereitung
- Verdampfen des Brennstoffs
- Gemischaufbereitung
- Verbrennung (Wärmefreisetzung) des Gemisches

Beim ersten Teilschritt wird der flüssige Energieträger durch Oberflächenvergrößerung aufbereitet. Dieser Vorgang wird durch den Einsatz von Zerstäubungs- oder Verteilungssystemen durchgeführt. Das Zerstäuben oder Verteilen des flüssigen Brennstoffs dient einerseits zum Fluidtransport und andererseits, um die spezifische Oberfläche zu vergrößern. Da die Verdampfung eines flüssigen Energieträgers an den Phasengrenzflächen abläuft, kann hier eine Erhöhung der Reaktionsgeschwindigkeit und damit eine zeitliche Minimierung des Prozesses erreicht werden.

Eine Verdampfung eines flüssigen Mediums in eine gasförmige Komponente wird als Phasenübergang bezeichnet. Bei einer Verdampfung in Luft wird der Brennstoff mit Luft vermischt und verdampft. Eine direkte Verdampfung, stellt zunächst eine Verdampfung des Brennstoffs dar, der dadurch gasförmig mit Luft gemischt werden kann. Im Falle einer Verdampfung von Methanol erfolgt die Zugabe von Methanol in der Verdampfereinrichtung und anschließend wird das dampfförmige Methanol in der Mischeinrichtung mit Luft gemischt werden. Durch die räumliche Trennung von Verdampfung und Mischung liegt erst nach Gemischbildung ein zündfähiges Gemisch von Brennstoff und Luft vor.

Die Energie zum Zünden eines Brennstoffgemisches wird durch die Zündeinrichtung bereitgestellt.

Insbesondere ist die Verdampfereinrichtung 28 derart ausgebildet, dass der verdampfte Brennstoff mit einem gleichmäßigen bzw. konstanten Volumenstrom und nicht pulsierend abgegeben wird.

Das erfindungsgemäße Brennersystem 20 verhindert eine pulsierende Verbrennung bzw. eine dazu führende pulsierende Verdampfung indem 1. eine Kondensation des Brennstoffes in Brennerbauteilen durch Überhitzung des Brennerdampfes verhindert wird. 2. Indem die Pulsation der Pumpe durch schwammartige Strukturen in der Verdampfereinrichtung (poröser Metallschaum), die eine Oberflächenvergrößerung aufgrund ihrer niedrigen Oberflächenspannung bzw. Kapillarkräfte bewirken, ausgeglichen wird. Der Brennstoffüberschuss durch einen Pumpenhub kann in der inneren Struktur zwischengespeichert und kontinuierlich als Dampf abgegeben werden. Auf diese Weise kann der Brennstoff der Verdampfereinrichtung 28 auch mittels einer einfach aufgebauten Pumpe mit unstetiger Förderleistung zugeführt werden.

Weiterhin ist erfindungsgemäß vorgesehen, dass eine Temperatur der thermischen Energie des vom Brennersystem abgegebenen Heißgastromes einstellbar ist. Da die Heißgastemperatur mit der bspw. eine Brennstoffzelle 2 beaufschlagt werden kann begrenzt ist wird dem Abgasstrom 38 über die Tertiärlufteinrichtung 16 kühle Umgebungsluft (Tertiärluft 37) zugeführt, um diese auf eine vorbestimmte Temperatur einzustellen bzw. zu regeln. Durch eine entsprechende Regelung der Lüfterdrehzahl des Gebläses der Tertiärlufteinrichtung 16 kann die Ausgangstemperatur des Heißgastromes 39 sehr genau (+/- 2°C) geregelt bzw. eingestellt werden.

Die Brennereinrichtung 21 ist derart ausgebildet dass ihre thermische Leistung (über Temperatur oder Volumenstrom) einstellbar bzw. regelbar ist. Je nach Anwendung des Brennersystems kann die benötigte Heizleistung variieren. Um ein ungünstiges Takten der Brennereinrichtung (an/aus) des Brennersystems 20 mit all seinen Nachteilen (Abkühlverluste, elektrische Verluste durch Vorheizung, schlechtere Abgaswerte während Start) zu vermeiden, kann die Leistung der Brennereinrichtung größtenteils unabhängig von der Ausgangstemperatur moduliert werden. Dies kann entweder in kleinem Rahmen durch Einstellung eines Verbrennungslambdas bei konstantem Brennerluftstrom geschehen oder über einen weiten Bereich durch Konstanthalten des Brennerlambdas bei gleichzeitiger Variierung der Brennerluftversorgung. Die Ausgangstemperatur kann trotzdem im Rahmen der Förderleistung des Gebläses der Tertiärlufteinrichtung konstant gehalten werden da je nach gewünschtem Temperaturniveau der austretende Gasmassenstrom variiert, nicht jedoch die abgegebene Heizleistung.

Die thermische Leistung zum Starten des Brennersystems 20 bevor dieses in den Betrieb übergeht und die Verdampfereinrichtung 28 über die Brennereinrichtung 21 beheizt wird erfolgt mittels der Heizpatrone. Dies ist eine einfache und günstige Lösung.

Zudem kann die Temperatur in der Verdampfereinrichtung 28 über ein in die Heizpatrone integriertes Thermoelement erfasst werden.

Dies ist vorgesehen, um eine Überhitzung des Heizelementes und damit einen Schaden an diesem zu vermeiden und um die Gefahr von thermischer Zersetzung des Brennstoffes zu reduzieren. Die Heizpatrone wird in der Startphase auf eine Maximaltemperatur eingeregelt die unter der thermischen Zersetzungstemperatur des eingesetzten Brennstoffes liegt. Dazu wird die Stromzufuhr der Heizpatrone getaktet.

Die Verdampfereinrichtung kann auf Basis von Erfahrungswerten (über Temperaturerfassung ist auch möglich) eine elektrische Heizung stufenweise ausschalten. Wie solche Erfahrungswerte ermittelt werden können wird im Folgenden beschrieben.

Vorheizen:
- Die Heizpatrone zur elektrischen Vorheizung des Verdampfers kann über eine Puls-Weiten-Modulations (PWM)-Regelung bspw. mit bspw. 50 ms Intervall geregelt werden.
- Dabei ist eine Regelung in bspw. 10% Schritten vorgesehen.
- Um die Haltbarkeit der Heizpatrone zu verlängern wird mit einer maximalen Heizleistung von bspw. 80% gearbeitet, da dies durch die stromlosen Phasen den Heizleiter entsprechend weniger belastet.
- Des Weiteren wird die Temperatur der Heizpatrone durch einen in selbige integrierten Thermosensor erfasst und mit Hilfe der Regelung auf maximal 500°C begrenzt. Wird die Grenztemperatur erreicht bzw. überschritten, wird die Heizleistung der Patrone schrittweise reduziert bis sich die konstante Grenztemperatur einstellt.
- Als einer der Indikatoren für die Brennerzündung muss die Temperatur der Heizpatrone für mehr als 5 Sekunden über 450°C liegen (die anderen sind eine Vorheizung des Diffusors auf min. 70°C und mindestens 4 Minuten Heizzeit).
- Die Temperaturbegrenzung auf maximal 500°C dient neben dem Schutz der Heizpatrone auch dazu eine thermische Zersetzung des Methanols zu unterbinden
- Die Temperaturgrenzen sind Softwareseitig hinterlegt und je nach verwendetem Brennstoff variabel anpassbar.

Ausfaden der Heizung:
- Nach erfolgreicher Zündung des Brenners (Kraftstoffventil für mehr als 20 Sekunden geöffnet und eine Ausgangstemperatur von über 150°C) wir die Heizung Zunächst auf 30% Leistung reduziert.
- Anschließend wird die Heizleistung schrittweise (1% Schritte) reduziert bis die Heizung vollständig abgeschaltet ist. Pro Schritt werden 32 Systemsoftwaretakte (500ms) gezählt.
- Wobei eine aktive Leistungsanpassung nur in bspw. 10% Schritten erfolgt, die restlichen Schritte dazwischen dienen nur der einfacheren Regelstrategie. Entsprechend wird bei einem Regelwert von 39% begonnen welcher nur 30% realer Heizleistung entspricht.
- Die Anzahl der nötigen Systemtakte je Schritt können individuell an den verwendeten Kraftstoff angepasst werden.
- Zusätzlich kann über die in der Heizpatrone integrierte Temperaturerfassung sichergestellt werden, dass die Temperatur im Verdampfer nicht unter die Siedetemperatur des verwendeten Kraftstoffes fällt. Damit können die Abschaltschritte der Heizung bei Bedarf auch hinausgezögert oder rückgängig gemacht werden.

## Patentansprüche

1. Brennersystem (20) zum Bereitstellen von thermischer Energie umfassend eine Verdampfereinrichtung (28) zum Verdampfen eines flüssigen Brennstoffes, um vollständig verdampften Brennstoff bereitzustellen,
eine Brennerluftzuführeinrichtung (41) zum Bereitstellen von Brennerluft (34),
einen Oberflächenbrenner zum Verbrennen eines Brennstoffgemisches umfassend den vollständig verdampften Brennstoff und die Brennerluft (34), um einen Abgasstrom (38) bereitzustellen,
eine Abschirmplatte mit Öffnungen zum Hindurchführen und zum Regeln der thermischen Energie des Abgasstromes (38) des Oberflächenbrenners, wobei
der Oberflächenbrenner mit der Verdampfereinrichtung (28) über die Abschirmplatte derart gekoppelt ist, dass im Betrieb der Abgasstrom (38) des Oberflächenbrenners die thermische Energie und die zur vollständigen Verdampfung des Brennstoffes benötigte Verdampfungstemperatur in der Verdampfereinrichtung (28) bereitstellt, wobei die Abschirmplatte sowohl zur Strahlungsabschirmung der Verdampfereinrichtung (28) ausgebildet ist, als auch zur Durchmischung des heißen Abgasstromes (38) mit einer Tertiärluft (37) um eine Gesamtabgastemperatur zu reduzieren, um diese auf ein geeignetes Niveau für die vollständige Verdampfung abzukühlen, und
eine Tertiärluftzuführeinrichtung zum Zuführen von Tertiärluft (37) zum Abgasstrom (38), um eine Temperatur des Abgasstroms (38) durch Vermischung mit der Tertiärluft (37) einzustellen, um einen Heißgasstrom (39) auszubilden.

2. Brennersystem (20) gemäß Anspruch 1,
**dadurch gekennzeichnet,**
**dass** der Oberflächenbrenner eine Brennerbrille (27) und ein damit verbundenes Metall- oder Keramikfasergeflecht, einen Diffusor (25), eine Zündeinrichtung und/oder eine Flammüberwachungseinrichtung umfasst.

3. Brennersystem (20) gemäß Anspruch 1 oder 2,
**dadurch gekennzeichnet,**
**dass** die Brennerluftzuführeinrichtung (41) eine Primär-/Sekundärluftzuführeinrichtung ist, die zum Zuführen von Primärluft (35) vorgesehen ist, um das Brennstoffgemisch auszubilden, wobei diese dem Brennstoffdampf vor der Verbrennung zugeführt wird, und/oder die zum Zuführen von Sekundärluft zum Kühlen der Brennereinrichtung (21), und/oder des Diffusors (25) und/oder der Brennkammer und/oder zur Nachverbrennung vorgesehen ist.

4. Brennersystem (20) gemäß einem der Ansprüche 1 bis 3,
**dadurch gekennzeichnet,**
**dass** die Abschirmplatte die Verdampfereinrichtung (28) thermisch abschirmt und/oder wobei die Funktionseinrichtung (29) Bestandteil der Verdampfereinrichtung (28) ist.

5. Brennersystem (20) gemäß einem der Ansprüche 1 bis 4,
**dadurch gekennzeichnet,**
**dass** die Verdampfereinrichtung (28) geschlossen ausgebildet ist, wobei die Verdampfereinrichtung (28) einen Verdampferraum (46) zur Verdampfung des flüssigen Brennstoffes umfasst, und wobei ein Ausgang der Verdampfereinrichtung nur über einen Leitungsabschnitt mit einem Einlass der Brennereinrichtung (21) verbunden ist, und die Verdampfereinrichtung (28) einen Einlass zum Zuführen von flüssigem Brennstoff aufweist.

6. Brennersystem (20) gemäß einem Anspruch 5,
**dadurch gekennzeichnet,**
**dass** in dem Leitungsabschnitt der den Ausgang der Verdampfereinrichtung (28) mit dem Brennstoffeinlass der Brennereinrichtung (21) verbindet ein 3/2-Wege Ventil (19) angeordnet ist.

7. System umfassend ein Brennersystem (20) gemäß einem der Ansprüche 1 bis 6 und eine mit dem Brennersystem (20) gekoppelte Einrichtung, wobei diese Einrichtung ein Verbrennungsmotor oder ein Brennstoffzellenstapel (2) oder eine Batterie ist, wobei durch das Brennersystem (20) thermische Energie eines Abgasstromes (38) in Form von verdünntem Abgas bereitstellbar ist, und wobei diese thermische Energie direkt oder über eine separat ausgebildete Wärmetauschereinrichtung an die mit dem Brennersystem (20) gekoppelte Einrichtung in Form von temperierter Luft abgegeben wird.

8. Verfahren zum Bereitstellen von thermischer Energie mit einem Brennersystem (20) gemäß einem der Ansprüche 1 bis 6 umfassend die folgenden Schritte:
Erwärmen der Verdampfereinrichtung (28) mit einer elektrischen Heizeinrichtung während einer Startphase, vollständiges Verdampfen des flüssigen Brennstoffes in der Verdampfereinrichtung (28), Zuführen des vollständig verdampften Brennstoffes zum Oberflächenbrenner, und Verbrennen des verdampften Brennstoffes in der als der Oberflächenbrenner ausgebildeten Brennereinrichtung (21), um thermische Energie in Form eines Abgasstromes (38) bereitzustellen, Verwendung eines Teiles der thermischen Energie, um den Brennstoff in der Verdampfereinrichtung (28) während des Betriebs zu Verdampfen, so dass die Energie zum Verdampfen in der Verdampfereinrichtung (28) ausschließlich von der Brennereinrichtung (21) bereitgestellt wird.

9. Verfahren gemäß Anspruch 8, wobei eine Regelung bzw. Steuerung der thermischen Energie des Abgasstromes zwischen Oberflächenbrenner und Verdampfereinrichtung (28) über in einer Abschirmplatte einer Funktionseinrichtung ausgebildete (29) Öffnungen erfolgt.

10. Verfahren gemäß Anspruch 8 oder 9, wobei Primärluft (35) zugeführt wird, um ein Brennstoffgemisch auszubilden, wobei die Primärluft (35) dem Brennstoffdampf vor der Verbrennung zugeführt und/oder
von Sekundärluft (36) zugeführt wird, die zum Kühlen eines Diffusors (25) und/oder einer Brennkammer der Brennereinrichtung (21) vorgesehen ist, und/oder zu einer Nachverbrennung verwendet wird, wobei die Primär (35) und die Sekundärluft (36) vorzugsweise von einer Brennerluftzuführeinrichtung (41), die als Primär-/Sekundärlufteinrichtung, bezeichnet wird zugeführt wird.

11. Verfahren gemäß einem der Ansprüche 8 bis 10, wobei Tertiärluft (37) zugeführt wird, um eine Temperatur des thermischen Abgasstroms (38) durch Vermischung mit der Tertiärluft (37) einzustellen, so dass daraus ein Heißgasstrom (39) ausgebildet wird, wobei eine Regelung der Ausgangstemperatur des Heißgasstromes (39) im Brennerbetrieb über die Tertiärluft (37) unabhängig von der Verbrennung und der Verbrennungsluft erfolgt.

12. Verfahren gemäß einem der Ansprüche 8 bis 11, wobei über ein 3/2-Wege Ventil (19) ein Ausgang der Verdampfereinrichtung (28) während einer Startphase offengehalten wird und/oder, dass bei Beendigung des Betriebs der Brennereinrichtung (21) in der Verdampfereinrichtung (28) verbliebenes Methanol über das 3/2-Wege Ventil (19) ausgasen kann, ohne dass es zu einem Druckanstieg in der Verdampfereinrichtung (28) kommt, wobei ein Innendruck der Verdampfereinrichtung (28) zum Zeitpunkt des Umschaltens des Ventils auf die Brennereinrichtung (21) in etwa dem Umgebungsdruck entspricht, sodass sich kein Druck in der Brennereinrichtung (21) entlädt und diese mit einem kontrollierten Brennstoff-Luftgemisch angefahren wird.

13. Verfahren gemäß einem der Ansprüche 8 bis 12, wobei als Brennstoff flüssige Brennstoffe mit Siedetemperaturen bis 350°C, wie z.B. Methanol, Ethanol, 2-Propanol, 2-Butanol, oder Benzin oder Petroleum vorgesehen sind.

## Claims

1. Burner system (20) for providing thermal energy comprising
an evaporator device (28) for evaporating a liquid fuel to provide completely evaporated fuel,
a burner air supply device (41) for providing burner air (34),
a surface burner for burning a fuel mixture comprising the completely vaporized fuel and the burner air (34) to provide an exhaust gas stream (38), a shielding plate with openings for passing through and regulating the thermal energy of the exhaust gas stream (38) of the surface burner, wherein
the surface burner is coupled to the evaporator device (28) via the shielding plate such that during operation the exhaust gas stream (38) of the surface burner provides the thermal energy and the evaporation temperature required for complete evaporation of the fuel in the evaporator device (28), wherein the shielding plate is designed both for radiation shielding of the evaporator device (28) and for mixing the hot exhaust gas stream (38) with a tertiary air (37) in order to reduce a total exhaust gas temperature in order to cool it to a suitable level for complete evaporation, and a tertiary air supply device for supplying tertiary air (37) to the exhaust gas stream (38) in order to adjust a temperature of the exhaust gas stream (38) by mixing with the tertiary air (37) in order to form a hot gas stream (39).

2. Burner system (20) according to claim 1,
**characterized in that** the surface burner comprises a burner cover (27) and a metal or ceramic fiber mesh connected thereto, a diffuser (25), an ignition device and/or a flame monitoring device.

3. Burner system (20) according to claim 1 or 2,
**characterized in that** the burner air supply device (41) is a primary/secondary air supply device which is provided for supplying primary air (35) to form the fuel mixture, wherein this is supplied to the fuel vapor before combustion, and/or which is provided for supplying secondary air for cooling the burner device (21), and/or the diffuser (25) and/or the combustion chamber and/or for afterburning.

4. Burner system (20) according to one of claims 1 to 3,
**characterized in that** the shielding plate thermally shields the evaporator device (28) and/or wherein the functional device (29) is a component of the evaporator device (28).

5. Burner system (20) according to one of claims 1 to 4,
**characterized in that** the evaporator device (28) is designed to be closed, wherein the evaporator device (28) comprises an evaporator chamber (46) for evaporating the liquid fuel, and wherein an outlet of the evaporator device is connected to an inlet of the burner device (21) only via a line section, and the evaporator device (28) has an inlet for supplying liquid fuel.

6. Burner system (20) according to a claim 5,
**characterized in that** a 3/2-way valve (19) is arranged in the line section which connects the outlet of the evaporator device (28) with the fuel inlet of the burner device (21).

7. System comprising a burner system (20) according to one of claims 1 to 6 and a device coupled to the burner system (20), wherein this device is an internal combustion engine or a fuel cell stack (2) or a battery, wherein thermal energy of an exhaust gas stream (38) is able to be provided in the form of diluted exhaust gas by the burner system (20), and wherein this thermal energy is delivered in the form of temperature-controlled air to the device coupled to the burner system (20) directly or via a separately formed heat exchanger device.

8. Method for providing thermal energy with a burner system (20) according to one of claims 1 to 6 comprising the following steps: heating the evaporator device (28) with an electric heating device during a start-up phase, completely evaporating the liquid fuel in the evaporator device (28), supplying the completely evaporated fuel to the surface burner, and
combustion of the vaporized fuel in the burner device (21) designed as the surface burner to provide thermal energy in the form of an exhaust gas stream (38), use of a portion of the thermal energy to vaporize the fuel in the evaporator device (28) during operation, so that the energy for vaporization in the evaporator device (28) is provided exclusively by the burner device (21).

9. Method according to claim 8, wherein regulation or control of the thermal energy of the exhaust gas flow between the surface burner and the evaporator device (28) takes place via openings (29) formed in a shielding plate of a functional device.

10. Method according to claim 8 or 9, wherein
primary air (35) is supplied to form a fuel mixture, wherein the primary air (35) is supplied to the fuel vapor before combustion and/or is supplied by secondary air (36) which is provided for cooling a diffuser (25) and/or a combustion chamber of the burner device (21) and/or is used for afterburning, wherein the primary (35) and the secondary air (36) is preferably supplied by a burner air supply device (41), which is referred to as a primary/secondary air device.

11. Method according to one of claims 8 to 10, wherein
tertiary air (37) is supplied in order to adjust a temperature of the thermal exhaust gas stream (38) by mixing with the tertiary air (37), so that a hot gas stream (39) is formed therefrom, wherein the output temperature of the hot gas stream (39) is regulated during burner operation via the tertiary air (37) independently of the combustion and the combustion air.

12. Method according to one of claims 8 to 11, wherein
an outlet of the evaporator device (28) is kept open during a start-up phase via a 3/2-way valve (19) and/or that when the operation of the burner device (21) ends, methanol remaining in the evaporator device (28) can outgas via the 3/2-way valve (19) without there being an increase in pressure in the evaporator device (28), wherein an internal pressure of the evaporator device (28) at the time the valve is switched over to the burner device (21) corresponds approximately to the ambient pressure, so that no pressure is discharged in the burner device (21) and it is started up with a controlled fuel-air mixture.

13. Method according to one of claims 8 to 12,
wherein liquid fuels with boiling temperatures up to 350°C, such as methanol, ethanol, 2-propanol, 2-butanol, or gasoline or petroleum are provided as fuel.

## Revendications

1. Système de brûleur (20) pour fournir de l'énergie thermique comprenant un dispositif évaporateur (28) pour l'évaporation d'un combustible liquide afin de fournir un combustible entièrement évaporé,
un dispositif d'amenée d'air de combustion (41) pour fournir de l'air de combustion (34),
un brûleur de surface pour brûler un mélange de combustible comprenant le combustible complètement évaporé et l'air de combustion (34) pour fournir un courant de gaz d'échappement (38), une plaque de protection comportant des ouvertures pour le passage et la régulation de l'énergie thermique du courant de gaz d'échappement (38) du brûleur de surface,
le brûleur de surface étant couplé au dispositif évaporateur (28) par l'intermédiaire de la plaque de protection de telle sorte qu'en fonctionnement, le courant de gaz d'échappement (38) du brûleur de surface fournit l'énergie thermique et la température d'évaporation nécessaire à l'évaporation complète du combustible dans le dispositif évaporateur (28), la plaque de protection étant conçue à la fois pour protéger du rayonnement le dispositif évaporateur (28) et pour mélanger le courant de gaz d'échappement (38) chaud avec un air tertiaire (37) afin de réduire une température totale de gaz d'échappement pour la refroidir à un niveau approprié pour l'évaporation complète, et
un dispositif d'amenée d'air tertiaire pour fournir de l'air tertiaire (37) au courant de gaz d'échappement (38) afin d'ajuster une température du courant de gaz d'échappement (38) en le mélangeant avec l'air tertiaire (37) pour former un courant de gaz chaud (39).

2. Système de brûleur (20) selon la revendication 1,
**caractérisé en ce que** le brûleur de surface comprend une lunette de brûleur (27) et un treillis de fibres métalliques ou céramiques relié à celle-ci, un diffuseur (25), un dispositif d'allumage et/ou un dispositif de surveillance de la flamme.

3. Système de brûleur (20) selon la revendication 1 ou 2,
**caractérisé en ce que** le dispositif d'amenée d'air de combustion (41) est un dispositif d'amenée d'air primaire/secondaire qui est prévu pour fournir de l'air primaire (35) afin de former le mélange de combustible, celui-ci étant fourni à la vapeur de combustible avant la combustion, et/ou qui est prévu pour fournir de l'air secondaire afin de refroidir le dispositif brûleur (21), et/ou le diffuseur (25) et/ou la chambre de combustion et/ou pour la post-combustion.

4. Système de brûleur (20) selon l'une des revendications 1 à 3,
**caractérisé en ce que** la plaque de protection protège thermiquement le dispositif évaporateur (28) et/ou dans lequel le dispositif fonctionnel (29) fait partie du dispositif évaporateur (28).

5. Système de brûleur (20) selon l'une des revendications 1 à 4,
**caractérisé en ce que** le dispositif évaporateur (28) est réalisé fermé, le dispositif évaporateur (28) comprenant une chambre d'évaporation (46) pour l'évaporation du combustible liquide, et une sortie du dispositif évaporateur n'étant reliée à une entrée du dispositif brûleur (21) que par un tronçon de conduite, et le dispositif évaporateur (28) comportant une entrée pour l'amenée de combustible liquide.

6. Système de brûleur (20) selon une revendication 5,
**caractérisé en ce qu'**une vanne 3/2 voies (19) est disposée dans le tronçon de conduite qui relie la sortie du dispositif évaporateur (28) à l'entrée de combustible du dispositif brûleur (21).

7. Système comprenant un système de brûleur (20) selon l'une des revendications 1 à 6 et un dispositif couplé au système de brûleur (20), ce dispositif étant un moteur à combustion interne ou un empilement de piles à combustible (2) ou une batterie, dans lequel de l'énergie thermique d'un courant de gaz d'échappement (38) peut être fournie par le système de brûleur (20) sous la forme de gaz d'échappement dilués, et cette énergie thermique étant transmise directement ou par l'intermédiaire d'un dispositif d'échange de chaleur réalisé séparément au dispositif couplé au système de brûleur (20) sous la forme d'air tempéré.

8. Procédé de fourniture d'énergie thermique avec un système de brûleur (20) selon l'une des revendications 1 à 6, comprenant les étapes suivantes :
chauffage du dispositif évaporateur (28) comprenant un dispositif de chauffage électrique pendant une phase de démarrage,
évaporation complète du combustible liquide dans le dispositif évaporateur (28), l'amenée du combustible complètement évaporé au brûleur de surface, et
combustion du combustible évaporé dans le dispositif brûleur (21) conçu comme le brûleur de surface, afin de fournir l'énergie thermique sous la forme d'un courant de gaz d'échappement (38), utilisation d'une partie de l'énergie thermique afin d'évaporer le combustible dans le dispositif évaporateur (28) pendant le fonctionnement, de sorte que l'énergie pour l'évaporation dans le dispositif évaporateur (28) est fournie exclusivement par le dispositif brûleur (21).

9. Procédé selon la revendication 8, une régulation ou une commande de l'énergie thermique du courant de gaz d'échappement entre le brûleur de surface et le dispositif évaporateur (28) étant effectuée par l'intermédiaire d'ouvertures (29) formées dans une plaque de protection d'un dispositif fonctionnel.

10. Procédé selon la revendication 8 ou 9,
de l'air primaire (35) étant fourni pour former un mélange de combustible, l'air primaire (35) étant fourni à la vapeur de combustible avant la combustion et/ou
étant fourni par de l'air secondaire (36) prévu pour refroidir un diffuseur (25) et/ou une chambre de combustion du dispositif brûleur (21) et/ou utilisé pour une post-combustion, l'air primaire (35) et l'air secondaire (36) étant de préférence fournis par un dispositif d'amenée d'air de combustion (41), appelé dispositif d'air primaire/secondaire.

11. Procédé selon l'une des revendications 8 à 10,
de l'air tertiaire (37) étant amené pour ajuster une température du courant de gaz d'échappement thermique (38) par mélange avec l'air tertiaire (37), de sorte qu'un courant de gaz chaud (39) est formé à partir de celui-ci, une régulation de la température de sortie du courant de gaz chaud (39) en fonctionnement du brûleur étant effectuée par l'intermédiaire de l'air tertiaire (37) indépendamment de la combustion et de l'air de combustion.

12. Procédé selon l'une des revendications 8 à 11,
une sortie du dispositif évaporateur (28) étant maintenue ouverte par l'intermédiaire d'une vanne 3/2 voies (19) pendant une phase de démarrage et/ou en ce que, à la fin du fonctionnement du dispositif brûleur (21), le méthanol restant dans le dispositif évaporateur (28) peut être dégazé par l'intermédiaire de la vanne 3/2 voies (19) sans que la pression n'augmente dans le dispositif évaporateur (28), une pression interne du dispositif évaporateur (28) au moment de la commutation de la vanne sur le dispositif brûleur (21) correspondant à peu près à la pression ambiante, de sorte qu'aucune pression ne se décharge dans le dispositif brûleur (21) et que celui-ci est démarré avec un mélange combustible-air contrôlé.

13. Procédé selon l'une des revendications 8 à 12,
des combustibles liquides comportant des températures d'ébullition allant jusqu'à 350 °C, comme par exemple le méthanol, l'éthanol, le propanol-2, le butanol-2, ou l'essence ou le pétrole, étant prévus comme combustible.
